(19) Europäisches Patentamt
European Patent Office
Office européen des brevets

(11) **EP 3 354 481 A1**

(12) **EUROPEAN PATENT APPLICATION**

(43) Date of publication:
01.08.2018 Bulletin 2018/31

(51) Int Cl.:
*B60C 1/00* *(2006.01)*          *C08L 15/00* *(2006.01)*
*C08F 212/36* *(2006.01)*     *C08F 218/18* *(2006.01)*
*C08F 222/10* *(2006.01)*

(21) Application number: 17153279.9

(22) Date of filing: **26.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ARLANXEO Deutschland GmbH**
**41540 Dormagen (DE)**

(72) Inventors:
• **Zhou, Jiawen**
**47443 Moers (DE)**
• **Früh, Thomas**
**42115 Wuppertal (DE)**
• **Kohl, Christopher**
**55127 Mainz (DE)**

(74) Representative: **Wichmann, Birgid**
**LANXESS Deutschland GmbH**
**LEX-IPR**
**Kennedyplatz 1**
**50569 Köln (DE)**

(54) **FOAMED SEALING COMPOUNDS**

(57)     A polymer based sealing compound which is foamed, which is applied to vehicle tyres for the reduction in weight and improvement of driving dynamics, a process for producing such foamed sealing compounds, and the use thereof in tyres.

**Description**

Broadly, the present invention relates to a polymer based foamed sealing compound applied to vehicle tyres for the improvement of driving dynamics, a process for producing such foamed sealing compounds, and the use thereof in tyres.

In the operation of a pneumatic tyre for cars and trucks, there is the risk of damage to the tyre as a result of the penetration of foreign bodies and of the tyre losing air because of the damage. The loss of tyre air often leads to an unstable ride state which requires the immediate changing of or a makeshift repair to the tyre. In order not to have to stop and leave the vehicle for a tyre change or repair in hazardous traffic situations, various tyre and wheel designs have been developed. Thus, there exist on the market tyres having runflat properties which enable temporary continuation of the journey by lowering the tread onto a support ring beneath in the event of loss of tyre pressure. In addition, there are runflat tyres which feature a reinforced tyre sidewall which, in the event of loss of tyre pressure, can bear the axle load even without air pressure for a limited period, without getting into an unsafe ride situation. All these designs that are present on the market increase the weight of the tyre and the rolling resistance significantly, and hence the consumption of fuel in motor vehicle operation.

Tyres having a sealing compound in the form of a self-sealing layer which surrounds penetrating foreign bodies and/or directly closes the holes that they form are known in principle. However, this additional self sealing composition leads to an increase of the tyre weight. Automotive weight reduction is an important consideration to the automotive industry. This reduction not only concerns the total weight of the car, but also the weight of the so called non-suspended loads, which improves the comfort of driving and the safety. The non-suspended loads comprise the wheels including the brakes, parts of the wheel suspension and dampening (Grundlagen der Kraftfahrzeugtechnik, Karl-Ludwig Haken, 4. Aktualisierte Auflage, Carl-Hanser Verlag München).

As early as 1968, US-A-3,565,151 disclosed a self-sealing tyre containing two plies of sealing compounds which are separated by the inner liner and are supported from bead to bead within the tyre carcass. The sealing material consists mainly of styrene-butadiene rubber (SBR) and a small amount of crosslinkers, wherein the SBR component is a mixture of 80 phr to 95 phr (parts per hundred rubber) of cold-polymerized SBR and 5 phr to 20 phr of hot-polymerized SBR. The document does not give any pointer at all to adhesion and cohesion properties.

WO-A-2009/143895 discloses sealing compounds comprising precrosslinked SBR particles as a secondary component and natural or synthetic rubber as a main component. These crosslinked SBR particles are produced by hot emulsion polymerization. Various studies show that the reduction in the polymerization temperature from 50°C in the case of hot emulsion polymerization to 5°C in the case of cold emulsion polymerization had a strong influence on the molecular weight distribution. The formation of low molecular weight fractions in the rapid reaction of the thiols in the initial phase of the free-radical polymerization at 5°C was distinctly reduced, and so better control of the chain length of the polymers was enabled. It was shown that, as well as the improved chain length distribution, the unwanted and uncontrolled crosslinking reaction was also distinctly reduced. The SBR particles obtained by hot emulsion polymerization therefore have, compared to cold polymers, a very broad molecular weight distribution and a high level of uncontrolled branching. Controlled adjustment of the viscoelastic properties is therefore impossible (Science and Technology of Rubber, James E. Mark, Burak Erman, Elsevier Academic Press, 2005, page 50).

Viscoelasticity is a characteristic of the material in the sense that, as well as features of pure elasticity, features of viscous fluidity are also present, which is manifested, for example, in the occurrence of internal friction on deformation.

The resulting hysteresis is typically characterized by the measurement of the loss factor tan δ at high temperature (e.g. 60°C) and is a key parameter for rubber mixtures in tyres, especially for tyre treads. The hysteresis is not just an indicator of the heat build up in rubber mixtures under dynamic stress (reversible elongation) but also a good indicator of the rolling resistance of a tyre (Rubber Technologist's Handbook, Volume 2; page 190). A measurement parameter for hysteresis losses is the tan δ, which is defined as the ratio of loss modulus to storage modulus; cf., for example, also DIN 53 513, DIN 53 535. Commercially available sealing compounds have, inter alia, comparatively high tan δ values at 60°C.

The lowering of tan δ in the temperature/frequency range and amplitude range of application-related relevance leads, for example, to reduced heat buildup in the elastomer. Minimum rolling resistance of the tyres enables minimum fuel consumption of the vehicle equipped therewith.

Rolling resistance is understood to mean the conversion of mechanical energy to heat by the rotating tyre per unit length. The dimension of rolling resistance is joules per metre (Scale Models in Engineering, D. Schuring, Pergamon Press, Oxford, 1977).

The currently existing solutions for noise reduction and increase of comfort for tyres comprise the use of a foamed ring which is applied with the help of an adhesive composition to the interliner of the tire. This foamed ring possesses the property to absorb noise. Tires which have been equipped with this material are, however, not self sealing.

In DE 19806935 A1 it is disclosed that a melamin resin foam or a PU foam which is either chemically and/or mechanically bound to the innerliner during the vulcanization of the tire, functions in a noise absorbing manner. Self sealing properties, however, are not disclosed.

In US 20060144496 A1 it is disclosed that a double layer innerliner also absorbs noise, wherein the first layer of the innerliner represents a non-foaming and the second layer a foaming elastomeric material. The foamed material is prepared by vulcanizing a rubber mixture which emits nitrogen during vulcanization. Self sealing properties of the tire, however, are not disclosed.

In DE 102013208445 A1 it is disclosed that a foamed polymeric material, preferably a pressure sensitive adhesive composition, can be prepared by extrusion. The material is preferably prepared by adding expandable micro balloons to the matrix material which may represent natural rubber and/or styrene butadiene-rubber, and subsequent mixing, e.g. in an extruder. Such adhesive compositions dampen and isolate vibrations in an improved manner. Self sealing properties and the use in tires are not disclosed.

DE102205042380 A1 describes an apparatus for preparing a foamed material, comprising: a gas dosing pipe which can be connected on one end with a gas source, a material dosing pipe which on the one hand can be connected to a material source, a material transporting apparatus which on a second end is connected to the material dosing pipe and a mixing apparatus to which the material and gas can be dosed and mixed and from which a homogeneously mixed foam can be removed via an outlet line. The use of such a material in tires is not disclosed.

In DE 102007028932 A1 the simultaneous use of self sealing and a noise absorbing formed ring in tires is described. The use of the noise absorbing foamed ring which adheres to the innerliner reduces the noise. The foamed ring adheres to a beforehand applied sealant which represents a viscos mixture on the basis of butyl rubber, a polybutylene or silicon. A further reduction of the weight of the such self sealing tire by an additional application of a foamed cover cannot be achieved. An improved driving dynamic is therefore not disclosed. While, in US 6962181 B2 self sealing tires on the basis of butyl rubber in the presence of an organic peroxide and glass hollow spheres are disclosed, wherein the glass hollow spheres used in a small dosage can result in an increase of the storage modulus of the self sealing mixture. Due to the low dosage the density of the sealing composition is, however, not significantly reduced. A composition with a lower density and an improved driving dynamics is not disclosed.

It is known that what are called rubber gels can be used in blends with a wide variety of different rubbers in tyre treads, in order, for example, to improve the rolling resistance of car tyres (see, for example, DE-A-4220563, GB-A-1078400, EP-A-405216 and EP-A-0854171).

DE 60118364 T2, EP-A-1149866 and EP-A-1291369 describe the production of SBR microgels with the aid of cold emulsion polymerization for tyre applications.

DE-A-10345043 and DE-A-10-2005-014271 disclose that what are called microgels are also used in uncrosslinked mixtures containing a thermoplastic material or a functional additive.

Sealing compounds have to meet high demands in practical use. They have to be soft, tacky and dimensionally stable over the entire range of operating temperatures from -40°C to +90°C. At the same time, the sealing compounds also have to be viscous. Following entry of an object through the tyre tread into the interior of the tyre, the sealing compound should enclose the object. If the object exits from the tyre, the sealing compound sticking to the object is drawn into the resulting hole or the sealing compound flows into the hole as a result of the internal tyre pressure and closes the hole. In addition, these sealing compounds have to be impervious to gas, such that temporary further travel is enabled. Sealing compounds should be applicable to the tyre innerliner in a simple process.

Sealing compounds additionally have to have high adhesion to the innerliner, and high cohesion in order to remain dimensionally stable within the tyre.

All solutions so far known in the patent literature in order to provide a self sealing tire increase the overall weight of the tires significantly. Commercially available sealing compounds show high density resulting in poorer driving dynamics.

Furthermore, the prior art also shows that sealing compounds are still not satisfactory for particular applications in which not only a minimum rolling resistance but also simultaneously excellent adhesion and cohesion properties are necessary.

The object of the present invention is to provide a specific self sealing composition for self sealing tires disposing of a very low density or to provide a self sealing compositions which allows the manufacture of tires with a very low weight and which thereby improves driving dynamics. It was further one aim of the invention to provide a self sealing composition, which can be applied either continuously or discontinuously via extrusion or injection molding to the inner liner and to improve the acoustic properties of the tyre.

Accordingly, a further problem addressed by the present invention was that of providing sealing compounds having excellent adhesion and cohesion and having minimum deterioration of rolling resistance.

The inventors have found that foamed sealing compositions comprising sealing gels and having a very low density surprisingly provide self sealing properties so that they can be used for self sealing tires.

It has been found that, surprisingly, the solution to the problems and the subject-matter of the present invention is foamed sealing compounds, comprising:

sealing gel in an amount of 45 phr to 100 phr, preferably 60 phr to 100 phr and more preferably 70 phr to 100 phr,

resin (C) in an amount of 10 phr to 60 phr, preferably 20 phr to 50 phr and more preferably 25 phr to 45 phr;

a natural rubber or synthetic rubber (E) in an amount of 1 to 50 phr, preferably 5 phr to 40 phr and more preferably 10 phr to 30 phr; and

said phr being based in each case on the total amount of sealing gel and the natural and/or synthetic rubber (E) in the sealing compound, and

wherein the sealing compound has a density of 0.001 to 0.935 g/mL, and more preferably 0.100 to 0.932 g/mL, and

wherein, said sealing gel is

i) in the form of a mixture comprising diene rubber gel (A) obtainable by emulsion polymerization of at least one conjugated diene in the presence of at least one crosslinker (I) and diene rubber gel (B) obtainable by emulsion polymerization of at least one conjugated diene in the presence of at least one crosslinker (II) or

ii) obtainable by emulsion polymerization of at least one conjugated diene in the presence of at least one crosslinker (I) and/or in the presence of at least one crosslinker (II), referred hereinafter as gel (H),

where

crosslinkers (I) are acrylates and methacrylates of polyhydric, preferably di- to tetrahydric, $C_2$-$C_{20}$ alcohols, preferably selected from the group consisting of acrylates and methacrylates of ethylene glycol, propane-1,2-diol, butane-1,4-diol, hexanediol, polyethylene glycol having 2 to 8 and preferably 2 to 4 oxyethylene units, neopentyl glycol, bisphenol A, glycerol, trimethylolpropane, pentaerythritol, sorbitol with unsaturated polyesters of aliphatic di- and polyols and mixtures thereof, more preferably selected from the group consisting of acrylates and methacrylates of propane-1,2-diol, butane-1,4-diol, neopentyl glycol, bisphenol A, glycerol, trimethylolpropane and pentaerythritol, and crosslinker (I) is most preferably trimethylolpropane trimethacrylate (TMPTMA),

and

crosslinkers (II) are compounds having two or more vinyl, allyl or isopropenyl groups or one maleimide unit, preferably selected from the group consisting of diisopropenylbenzene, divinylbenzene (DVB), divinyl ether, divinyl sulphone, diallyl phthalate, trivinylbenzene, triallyl cyanurate, triallyl isocyanurate, 1,2-polybutadiene, N,N'-m-phenylenemaleimide, tolylene-2,4-bis(maleimide) and triallyl trimellitate and mixtures thereof, more preferably selected from the group of diisopropenylbenzene, divinylbenzene and trivinylbenzene, and crosslinker (II) is most preferably divinylbenzene.

In a preferred embodiment the gel (H) of the sealing compound above is obtainable by emulsion polymerization of at least one conjugated diene in the presence of at least one crosslinker (I) and in the presence of at least one crosslinker (II).

In another emboidment, sealing gels are also mixtures of at least one gel (H) with diene rubber gel (A) or (B) or (A) and (B).

In an embodiment where styrene-butadiene copolymer (SBR) is the diene rubber gel (A) or diene rubber gel (B) or gel (H), such a diene rubber gel (A) or diene rubber gel (B) or gel (H) is obtainable by cold emulsion polymerization at 5°C to 20°C.

In an embodiment, the tan $\delta_f$ @ 20°C of a sealing compound in accordance with the invention is greater than 0.003 preferably above 0.005, and particularly preferred above 0.010, as measured by the Oberst Measurement method.

In one embodiment, the sealing gels of the invention have a Mooney viscosity (ML1+4) @ 100°C of 100 MU to 170 MU, preferably of 100 MU to 150 MU, more preferably of 100 MU to 130 MU.

The term diene rubber gel in the context of this invention is a diene rubber which has been reacted with at least one crosslinker (I) or with at least one crosslinker (II) during the polymerization.

Sealing compounds in the context of the invention may comprises further additives including one or more of ageing stabilizers (D) and plasticizers (F).

As used herein the term foamed sealing composition shall be understood to be a substance that is formed by trapping pockets of gas in a liquid or solid, which may be in the form of closed-cell foams and open-cell foams. In a closed-cell foam, the gas forms discrete pockets, each completely surrounded by the solid material. In an open-cell foams, the gas pockets connect with each other.

Methods for foaming compounds are known to those skilled in the art and generally involve mixing a blowing agent with the polymer to obtain an article with reduced density by displacing polymer with gas. Blowing or foaming agents broadly fall into two general classes-physical and chemical.

The foamed sealing composition can be prepared according to the generally known methods including for example:

i) The use of a blowing agent which is for example a nitrogen-releasing foaming agent that upon heating decomposes and releases nitrogen gas to create the porous foam structure. Examples for nitrogen-releasing foaming agents include azodicarbonic acid diamides (activated or non-activated); sulfohydrazides, such as p-toluenesulfohydrazide (TSH); dinitrosopentamethylene tetramine (DNPT); triazole derivatives; and azoisobutyric dinitrile or similar compounds. Examples commercially available foaming agents include: POROFOR® TSH from Bayer Chemicals; SAFOAM® from AMCO Plastic Material, Inc.; CELSPAN® from Phoenix Plastics Co.; and DNPT from Standard Chemical Industries.

ii) In a mixing apparatus (e.g., extruder), inert gases (e.g., $N_2$, $CO_2$) are dispersed under pressure in the sealing composition, which gases expand upon leaving the extruder and thereby form the foam.

iii) Included in the sealing compositions are hollow spheres, e.g. hollow glass spheres, which reduce the density of the sealing composition. Representative of the hollow glass microspheres are, for example, 3M™ Glass Bubbles S60 having an average spherical diameter of acout 30 $\mu$m, or 3M™ Glass Bubbles S60HS, or 3M™ Glass Bubbles iM16K, or 3M™ Glass Bubbles iM30K. Possible types of hollow spheres employed in the present invention also include silica balloon, Shirasu balloon, phenol balloon, vinylidene chloride balloon, alumina balloon, zirconia balloon, and the like, but are not limited to these examples. One type of hollow spheres or multiple types of hollow spheres mixed together may be used.

iv) Included in the sealing compositions are expandable micro balloons, these representing extremely small spherical particles comprising a thermoplastic shell in which a gas is included. Upon heating the thermoplastic shell softens and the gas within expands thereby leading to an expansion of the spherical particle. Hence, the volume of the micro balloons substantially increases and thereby lowers the density of the sealing composition. Expandable micro balloons are commercially available. Preferably to the invention is the use of unexpanded micro balloons because they show a larger expansion property in the compound than adding expanded types to the compound. Unexpanded micro balloons can be obtained from different producers. They mainly differ in their particle diameter, varying from 6-9 $\mu$m for the smaller types, e.g. Expancels, 461 DU 20, to 28-38 $\mu$m for the largest types, e.g. Expancels, 920-, 930-, and 951 DU 120, and the necessary expansion temperature varying from 75 to 220 °C. Commercially available mico balloons are for example Expancel® DU-Types (DU = dry unexpanded) from Akzo Nobel.

Foamed sealing compositions obtained by the process i) or ii) typically represent open cell structured foams which comprise beneficial acoustic properties in the acoustically relevant frequency band of 50 Hz to 3000 Hz. This is due to the fact that the noise fizzles out in the open structure. Foamed sealing compositions obtained by the process iii) or iv) are typically closed cell foams disposing of a particular mechanical stability.

Such a foamed sealing composition compared to non-foamed sealing sealing composition has a much lower density which reduces the weight of the tire compared to all known sealing compositions for self sealing tires.

Such foamed sealing compositions may be based on sealing gels comprising , particularly SBR diene rubber gels, which dispose of specific viscoelastic properties which allows to control the adhesion and cohesion of the sealing compositions.

The foamed sealing composition maybe prepared in a continuous or discontinuous process (extrusion/injection molding) and can be applied for example afterwards to the innerliner without subjecting the innerliner to a subsequent vulcanization.

It should be noted at this point that the scope of the invention includes any and all possible combinations of the components, ranges of values and/or process parameters mentioned above and cited hereinafter, in general terms or within areas of preference.

The diene rubber gels of the invention are produced by emulsion polymerization with at least one with crosslinker (I) or with crosslinker (II).

The crosslinking with crosslinker (I) or with crosslinker (II) can be conducted as follows:

a) The at least one crosslinker (I) or the at least one crosslinker (II) or at least one crosslinker (I) and one crosslinker (II) are initially charged.

b) The at least one crosslinker (I) or the at least one crosslinker (II) or at least one crosslinker (I) and one crosslinker (II) are metered in during the polymerization.

In the production of the diene rubber gels (A) and (B) and in the case of the gel (H) by emulsion polymerization, at least one conjugated diene is used as free-radically polymerizable monomer.

Examples of conjugated dienes are 1,3-butadiene, 2,3-dimethyl-1,3-butadiene, isoprene and chloroprene, preferably 1,3-butadiene.

In the production of the diene rubber gels (A) and (B) and in the case of the gel (H) by emulsion polymerization, it is also possible to use further monomers other than the diene used.

In the production of the diene rubber gels and sealing gels by emulsion polymerization, for example, the following free-radically polymerizable monomers are used as further monomers other than the diene monomer: 1,3-butadiene, vinylaromatics, preferably styrene, 2-methylstyrene, 3-methylstyrene, 4-methylstyrene, $\alpha$-methylstyrene, 2,4-dimethylstyrene, 2,4-diisopropylstyrene, 4-tert-butylstyrene and tert-butoxystyrene, more preferably styrene, acrylonitrile, isoprene, esters of acrylic acid and methacrylic acid, tetrafluoroethylene, vinylidene fluoride, hexafluoropropene, 2-chlorobutadiene, 2,3-dichlorobutadiene, carboxylic acids containing double bonds, preferably acrylic acid, methacrylic acid, maleic acid or itaconic acid, hydroxyl compounds containing double bonds, preferably hydroxyethyl methacrylate, hydroxyethyl acrylate or hydroxybutyl methacrylate, amine-functionalized (meth)acrylates, glycidyl methacrylate, acrolein, N-vinyl-2-pyrrolidone, N-allylurea, N-allylthiourea, secondary amino (meth)acrylates, preferably 2-tert-butylaminoethyl methacrylate and 2-tert-butylaminoethylmethacrylamide, or vinylic heteroaromatics such as 2-, 4-vinylpyridine and 1-vinylimidazole.

In the case of a vinylaromatic as further monomer, the amount of vinylaromatic is typically 1 phm to 20 phm, preferably 8 phm to 14 phm, based on the total amount of monomers.

In an embodiment where styrene-butadiene copolymer (SBR) is the diene rubber gel (A) or diene rubber gel (B) or gel (H), such an SBR of the invention is one obtainable by cold emulsion polymerization at 5°C to 20°C. Cold emulsion polymerization is a polymerization method familiar to those skilled in the art (see, inter alia, US-A-3,565,151 (column 2 line 26), EP-A-1291369 [0055], EP-A-1149866 ([0077], [0080])) Kautschuk Technologie, F. Röthemeyer, F. Sommer, Carl Hanser Verlag Munich Vienna, 2006; page 95 ff.). Cold emulsion polymerization is conducted at a temperature of 5°C to 20°C, preferably 5°C to 15°C and more preferably of 5°C to 10°C. Compared to cold emulsion polymerization, hot emulsion polymerization is conducted at a temperature of more than 20°C up to 150°C, preferably 40°C to 80°C.

The crosslinkers (I) and crosslinkers (II) differ by different incorporation characteristics during the emulsion polymerization.

In a preferred embodiment, crosslinkers (I) feature incorporation at an early stage in the polymerization.

Crosslinkers (I) are acrylates and methacrylates of polyhydric, preferably di- to tetrahydric, $C_2$-$C_{20}$ alcohols.

Preferred crosslinkers (I) are selected from the group consisting of acrylates and methacrylates of ethylene glycol, propane-1,2-diol, butane-1,4-diol, hexanediol, polyethylene glycol having 2 to 8 and preferably 2 to 4 oxyethylene units, neopentyl glycol, bisphenol A, glycerol, trimethylolpropane, pentaerythritol, sorbitol with unsaturated polyesters of aliphatic di- and polyols and mixtures thereof.

Particularly preferred crosslinkers (I) are acrylates and methacrylates of propane-1,2-diol, butane-1,4-diol, neopentyl glycol, bisphenol A, glycerol, trimethylolpropane and pentaerythritol.

A very particularly preferred crosslinker (I) is trimethylolpropane trimethacrylate (TMPTMA).

Crosslinkers (II) are compounds having two or more vinyl, allyl or isopropenyl groups or one maleimide unit.

Preferred crosslinkers (II) are selected from the group consisting of diisopropenylbenzene, divinylbenzene (DVB), divinyl ether, divinyl sulphone, diallyl phthalate, trivinylbenzene, triallyl cyanurate, triallyl isocyanurate, 1,2-polybutadiene, N,N'-m-phenylenemaleimide, tolylene-2,4-bis(maleimide) and triallyl trimellitate and mixtures thereof.

Particularly preferred crosslinkers (II) are diisopropenylbenzene, divinylbenzene, trivinylbenzene.

A very particularly preferred crosslinker (II) is divinylbenzene.

The amount of crosslinker used for the production of diene rubber gel (A) and (B) and for the production of gel (H), in the case of crosslinker (I), is typically 1 phm to 6 phm, preferably 1 phm to 4 phm, and more preferably 1.5 phm to 3 phm and, in the case of crosslinker (II), 0.2 phm to 4 phm, preferably 0.2 phm to 3 phm, and more preferably 0.5 phm to 2.7 phm, based on the total amount of diene monomer, further monomer and crosslinker in the diene rubber gel (A) or (B) or the gel (H), where the total amount of diene monomer, further monomer and crosslinker corresponds to 100 phm.

For the production of gel (H) having both crosslinker (I) and crosslinker (II), crosslinker (I) and crosslinker (II) are preferably used in a ratio of 5:1 to 1:5 and more preferably in a ratio of 5:1 to 1:1.

Emulsion polymerizations are generally conducted with use of emulsifiers. For this purpose, a wide range of emulsifiers are known and available to those skilled in the art. Emulsifiers used may, for example, be anionic emulsifiers or else uncharged emulsifiers. Preference is given to using anionic emulsifiers, more preferably anionic emulsifiers in the form of water-soluble salts.

Anionic emulsifiers used may be modified resin acids which are obtained by dimerization, disproportionation, hydrogenation and modification of resin acid mixtures comprising abietic acid, neoabietic acid, palustric acid, levopimaric acid. A particularly preferred modified resin acid is disproportionated resin acid (Ullmann's Encyclopedia of Industrial Chemistry, 2011, 6th edition, volume 31, p. 345-355).

Anionic emulsifiers used may also be fatty acids. These contain 6 to 22 carbon atoms per molecule. They may be fully saturated or contain one or more double bonds in the molecule. Examples of fatty acids are caproic acid, lauric acid, myristic acid, palmitic acid, stearic acid, oleic acid, linoleic acid, linolenic acid. The carboxylic acids are typically based on origin-specific oils or fats, for example ricinus oil, cottonseed, peanut oil, linseed oil, coconut fat, palm kernel oil, olive oil, rapeseed oil, soya oil, fish oil and bovine tallow etc. Preferred carboxylic acids derive from coconut fatty acid and from bovine tallow, and are partly or fully hydrogenated.

Such carboxylic acids based on modified resin acids or fatty acids are used in the form of water-soluble lithium, sodium, potassium and ammonium salts. The sodium salts and potassium salts are preferred.

Anionic emulsifiers are additionally sulphonates, sulphates and phosphates bonded to an organic radical. Useful organic radicals include aliphatic, aromatic, alkylated aromatic systems, fused aromatic systems, and methylene-bridged aromatic systems, where the methylene-bridged and fused aromatic systems may additionally be alkylated. The length of the alkyl chains is 6 to 25 carbon atoms. The length of the alkyl chains bonded to the aromatic systems is between 3 and 12 carbon atoms.

The sulphates, sulphonates and phosphates are used in the form of lithium salts, sodium salts, potassium salts and ammonium salts. The sodium salts, potassium salts and ammonium salts are preferred.

Examples of sulphonates, sulphates and phosphates of this kind are sodium laurylsulphate, sodium alkylsulphonate, sodium alkylarylsulphonate, sodium salts of methylene-bridged arylsulphonates, sodium salts of alkylated naphthalenesulphonates, and the sodium salts of methylene-bridged naphthalenesulphonates, which may also be oligomerized, where the oligomerization level is between 2 and 10. Typically, the alkylated naphthalenesulphonic acids and the methylene-bridged (and optionally alkylated) naphthalenesulphonic acids are in the form of isomer mixtures which may also contain more than one sulphonic acid group (2 to 3 sulphonic acid groups) in the molecule. Particular preference is given to sodium laurylsulphate, sodium alkylsulphonate mixtures having 12 to 18 carbon atoms, sodium alkylarylsulphonates, sodium diisobutylenenaphthalenesulphonate, methylene-bridged polynaphthalenesulphonate mixtures and methylene-bridged arylsulphonate mixtures.

Uncharged emulsifiers derive from addition products of ethylene oxide and propylene oxide onto compounds having sufficiently acidic hydrogen. These include, for example, phenol, alkylated phenol and alkylated amines. The mean polymerization levels of the epoxides are between 2 and 20. Examples of uncharged emulsifiers are ethoxylated nonylphenols having 8, 10 and 12 ethylene oxide units. The uncharged emulsifiers are typically not used alone, but in combination with anionic emulsifiers.

Preference is given to the sodium and potassium salts of disproportionated abietic acid and partly hydrogenated tallow fatty acid, and mixtures thereof, sodium laurylsulphate, sodium alkylsulphonates, sodium alkylbenzenesulphonate, and alkylated and methylene-bridged naphthalenesulphonic acids.

The emulsifiers are used in an amount of 0.2 phm to 15 phm, preferably 0.5 phm to 12.5 phm, more preferably 1.0 phm to 10 phm, based on the total amount of diene monomer, further monomer and crosslinker.

The emulsion polymerization is generally conducted using the emulsifiers mentioned. If, on completion of the polymerization, latices having a tendency to premature self-coagulation because of a certain instability are obtained, said emulsifiers can also be added for post-stabilization of the latices. This may become necessary particularly prior to the removal of unconverted monomers by treatment with steam and before any storage of latex.

The emulsion polymerization is conducted in such a way that the SBR rubber which is preferred in accordance with the invention is crosslinked during the polymerization. Therefore, the use of molecular weight regulators is generally not obligatory. To control the crosslinking, however, it is advantageous to use molecular weight regulators, but the nature thereof is uncritical. In that case, the regulator is typically used in an amount of 0.01 phm to 3.5 phm, preferably 0.05 phm to 2.5 phm, per 100 phm, based on the total amount of diene monomer, further monomer and crosslinker. Molecular weight regulators used may, for example, be mercaptan-containing carboxylic acids, mercaptan-containing alcohols, xanthogen disulphides, thiuram disulphides, halogenated hydrocarbons, branched aromatic or aliphatic hydrocarbons, or else linear or branched mercaptans. These compounds typically have 1 to 20 carbon atoms.

Examples of mercaptan-containing alcohols and mercaptan-containing carboxylic acids are monothioethylene glycol and mercaptopropionic acid. Examples of xanthogen disulphides are dimethylxanthogen disulphide, diethylxanthogen disulphide and diisopropylxanthogen disulphide.

Examples of thiuram disulphides are tetramethylthiuram disulphide, tetraethylthiuram disulphide and tetrabutylthiuram disulphide. Examples of halogenated hydrocarbons are carbon tetrachloride, chloroform, methyl iodide, diiodomethane, difluorodiiodomethane, 1,4-diiodobutane, 1,6-diiodohexane, ethyl bromide, ethyl iodide, 1,2-dibromotetrafluoroethane, bromotrifluoroethene, bromodifluoroethene.

Examples of branched hydrocarbons are those from which an H radical can readily be eliminated. Examples thereof are toluene, ethylbenzene, cumene, pentaphenylethane, triphenylmethane, 2,4-diphenyl-4-methyl-1-pentene, dipentene, and terpenes, for example limonene, α-pinene, β-pinene, α-carotene and β-carotene.

Examples of linear or branched mercaptans are n-hexyl mercaptan or else mercaptans containing 9 to 16 carbon atoms and at least three tertiary carbon atoms, where the sulphur is bonded to one of these tertiary carbon atoms. These mercaptans can be used either individually or in mixtures. Suitable examples are the addition compounds of hydrogen sulphide onto oligomerized propene, especially tetrameric propene, or onto oligomerized isobutene, especially trimeric isobutene, which are frequently referred to in the literature as tertiary dodecyl mercaptan ("t-DDM").

Such alkyl thiols or (isomer) mixtures of alkyl thiols are either commercially available or else are preparable by the person skilled in the art by processes that have been sufficiently well described in the literature (see, for example, JP-A-07-316126, JP-A-07-316127 and JP-A-07-316128, and also GB-A-823,823 and GB-A-823,824).

The individual alkyl thiols or mixtures thereof are typically used in an amount of 0.05 phm to 3 phm, preferably of 0.1 phm to 1.5 phm, based on the total amount of diene monomer, further monomer and crosslinker.

The metered addition of the molecular weight regulator or the molecular weight regulator mixture is effected either at the start of the polymerization or else in portions in the course of the polymerization, preference being given to the addition of all or individual components of the regulator mixture in portions during the polymerization.

The emulsion polymerization is typically initiated using polymerization initiators which break down to free radicals (free-radical polymerization initiators). These include compounds containing an -O-O- unit (peroxo compounds) or an -N=N- unit (azo compound).

The peroxo compounds include hydrogen peroxide, peroxodisulphates, peroxodiphosphates, hydroperoxides, peracids, peresters, peracid anhydrides and peroxides having two organic radicals. Suitable salts of peroxodisulphuric acid and peroxodiphosphoric acid are the sodium, potassium and ammonium salts. Suitable hydroperoxides are, for example, tert-butyl hydroperoxide, cumene hydroperoxide and p-menthane hydroperoxide. Suitable peroxides having two organic radicals are dibenzoyl peroxide, 2,4-dichlorobenzoyl peroxide, di-tert-butyl peroxide, dicumyl peroxide, tert-butyl perbenzoate, tert-butyl peracetate etc. Suitable azo compounds are azobisisobutyronitrile, azobisvaleronitrile and azobiscyclohexanenitrile.

Hydrogen peroxide, hydroperoxides, peracids, peresters, peroxodisulphate and peroxodiphosphate are also used in combination with reducing agents. Suitable reducing agents are sulphenates, sulphinates, sulphoxylates, dithionite, sulphite, metabisulphite, disulphite, sugar, urea, thiourea, xanthogenates, thioxanthogenates, hydrazine salts, amines and amine derivatives such as aniline, dimethylaniline, monoethanolamine, diethanolamine or triethanolamine. Initiator systems consisting of an oxidizing agent and a reducing agent are referred to as redox systems. In the case of use of redox systems, salts of transition metal compounds such as iron, cobalt or nickel are frequently additionally used in combination with suitable complexing agents such as sodium ethylenediaminetetraacetate, sodium nitrilotriacetate and trisodium phosphate or tetrapotassium diphosphate.

Preferred redox systems are, for example: 1) potassium peroxodisulphate in combination with triethanolamine, 2) ammonium peroxodiphosphate in combination with sodium metabisulphite ($Na_2S_2O_5$), 3) p-menthane hydroperoxide / sodium formaldehydesulphoxylate in combination with iron(II) sulphate ($FeSO_4$ *7 $H_2O$), sodium ethylenediaminoacetate and trisodium phosphate; 4) cumene hydroperoxide / sodium formaldehydesulphoxylate in combination with iron(II) sulphate ($FeSO_4$ *7 $H_2O$), sodium ethylenediamineacetate and tetrapotassium diphosphate.

The amount of oxidizing agent is preferably 0.001 phm to 1 phm based on 100 phm, based on the total amount of diene monomer, further monomer and crosslinker. The molar amount of reducing agent is between 50% and 500% based on the molar amount of the oxidizing agent used.

The molar amount of complexing agent is based on the amount of transition metal used and is typically equimolar therewith.

To conduct the polymerization, all or individual components of the initiator system are metered in at the start of the polymerization or during the polymerization.

Addition of all and individual components of the activator system in portions during the polymerization is preferred. Sequential addition can be used to control the reaction rate.

The polymerization time is generally in the range from 5 h to 30 h.

The conversion in the emulsion polymerization is in the range from 85% to 100%, preferably 87% to 99.5% and more preferably 88% to 97%.

The aim in the polymerization is for very high polymerization conversions, in order to crosslink the rubber. For this reason, it is optionally possible to dispense with the use of stoppers. If stoppers are used, suitable examples are dimethyl dithiocarbamate, sodium nitrite, mixtures of dimethyl dithiocarbamate and sodium nitrite, hydrazine and hydroxylamine and salts derived therefrom, such as hydrazine sulphate and hydroxylammonium sulphate, diethylhydroxylamine, diisopropylhydroxylamine, watersoluble salts of hydroquinone, sodium dithionite, phenyl-α-naphthylamine and aromatic phenols such as tert-butylcatechol, or phenothiazine.

The amount of water used in the emulsion polymerization is in the range from 70 to 300 phm, preferably in the range from 80 to 250 phm and more preferably in the range from 90 to 200 phm of water, based on the total amount of diene monomer, further monomer and crosslinker.

For reduction of the viscosity during the polymerization, for adjustment of the pH, and as a pH buffer, salts can be added to the aqueous phase in the course of the emulsion polymerization. Typical salts are salts of monovalent metals in the form of potassium hydroxide and sodium hydroxide, sodium sulphate, sodium carbonate, sodium hydrogencarbonate, sodium chloride and potassium chloride. Preference is given to sodium hydroxide or potassium hydroxide, sodium hydrogencarbonate and potassium chloride. The amounts of these electrolytes are in the range of 0 phm to 1 phm, preferably 0 to 0.5 phm, based on the total amount of diene monomer, further monomer and crosslinker.

To achieve homogeneous running of the polymerization, only a portion of the initiator system is used for the start of the polymerization and the rest is metered in during the polymerization. Typically, the polymerization is commenced with 10% by weight to 80% by weight, preferably 30% by weight to 50% by weight, of the total amount of initiator. It is also possible to subsequently meter in individual constituents of the initiator system.

The polymerization can be performed batchwise, semi-continuously or else continuously in a stirred tank cascade. In the case of the semi-batchwise process, water, monomers, initiators and emulsifiers are fed into the reactor over a particular period (for example over the entire polymerization time). There are various methods of adding reactants: For example, it is possible to meter the remainder of monomer (often together with initiator) into an initial charge composed of water, emulsifier and initiator and frequently also a particular amount of monomer during the polymerization. Another method is, for example, the initial charging of a portion of an emulsion containing all the reactants, and the metered addition of the rest of the emulsion during the polymerization, in which case the composition of the emulsion metered in may differ from the initial charge of emulsion for the commencement of the polymerization (A. E. Hamielec, H. Tobita, Polymerization Processes, 1. Fundamentals, Ullmann's Encyclopedia of Industrial Chemistry, 2011, page 88).

The advantages of such a semi-batchwise process are not just the better control of the polymerization and the removal of heat, because the rate of metered addition can be altered during the polymerization. The concentration of the unconverted monomers can be minimized by this method, such that the better control increases the reliability of the reaction. Moreover, productivity can be enhanced when the amount metered in is cooled beforehand, because less cooling is required during the polymerization.

When the period of metered addition of the monomers is increased in the semi-batchwise emulsion polymerization, the concentration of the monomers remains low during the polymerization, and the effect of this is that long-chain branches and crosslinking are promoted (A. E. Hamielec, H. Tobita, Polymerization Processes, 1. Fundamentals. Ullmann's Encyclopedia of Industrial Chemistry, 2011, page 85).

To remove unconverted monomers and volatile constituents, the short-stopped latex is subjected to a steam distillation. In this case, temperatures in the range from 70°C to 150°C are employed, the pressure being reduced in the case of temperatures of <100°C.

Before the volatile constituents are removed, the latex can be post-stabilized with emulsifier. For this purpose, the aforementioned emulsifiers are appropriately used in amounts of 0.1% by weight to 2.5% by weight, preferably 0.5% by weight to 2.0% by weight, based on 100 parts by weight of rubber.

Before or during the precipitation, one or more ageing stabilizers may be added to the latex. Suitable for this purpose are phenolic, aminic and also other ageing stabilizers.

Suitable phenolic ageing stabilizers are alkylated phenols, styrenated phenol, sterically hindered phenols such as 2,6-di-tert-butylphenol, 2,6-di-tert-butyl-p-cresol (BHT), 2,6-di-tert-butyl-4-ethylphenol, sterically hindered phenols containing ester groups, sterically hindered phenols containing thioether, 2,2'-methylenebis-(4-methyl-6-tert-butylphenol) (BPH), and also sterically hindered thiobisphenols.

If discolouration of the rubber is unimportant, aminic ageing stabilizers are also used, for example mixtures of diaryl-p-phenylenediamines (DTPD), octylated diphenylamine (ODPA), phenyl-$\alpha$-naphthylamine (PAN), phenyl-$\beta$-naphthylamine (PBN), preferably those based on phenylenediamine. Examples of phenylenediamines are N-isopropyl-N'-phenyl-p-phenylenediamine, N-1,3-dimethylbutyl-N'-phenyl-p-phenylenediamine (6PPD), N-1,4-dimethylpentyl-N'-phenyl-p-phenylenediamine (7PPD), N,N'-bis-1,4-(1,4-dimethylpentyl)-p-phenylenediamine (77PD), etc.

The other ageing stabilizers include phosphites such as tris(nonylphenyl) phosphite, polymerized 2,2,4-trimethyl-1,2-dihydroquinoline (TMQ), 2-mercaptobenzimidazole (MBI), methyl-2-mercaptobenzimidazole (MMBI), zinc methylmercaptobenzimidazole (ZMMBI). The phosphites are generally used in combination with phenolic ageing stabilizers.

The workup of the diene rubber gels thus produced can be effected by concentration, coagulation, co-coagulation with a further latex polymer or by freeze-coagulation (cf. US-2,187,146) or by spray-drying. In the case of workup by spray-drying, it is also possible to add standard flow aids, for example calcium carbonate or silica. Preference is given to workup by acid coagulation, optionally in the presence of monovalent salts such as sodium chloride and/or potassium chloride. Suitable acids are especially mineral acids such as sulphuric acid or phosphoric acid.

The diene rubber gels used for production of the sealing compounds may be either unmodified diene rubber gels having essentially no reactive groups, particularly at the surface, or modified diene rubber gels modified with functional groups, particularly at the surface. The following reagents in particular are useful for surface modification of the diene rubber gels with low molecular weight agents: elemental sulphur, hydrogen sulphide and/or alkyl polymercaptans such as 1,2-dimercaptoethane or 1,6-dimercaptohexane, and additionally dialkyl- and dialkylaryldithiocarbamate such as the alkali metal salts of dimethyldithiocarbamate and/or dibenzyldithiocarbamate, and also alkyl- and arylxanthogenates such as potassium ethylxanthogenate and sodium isopropylxanthogenate, and the reaction with the alkali metal or alkaline earth metal salts of dibutyldithiophosphoric acid and dioctyldithiophosphoric acid, and also dodecyldithiophosphoric acid. Said reactions can advantageously also be conducted in the presence of sulphur, in which case the sulphur is also incorporated with formation of polysulphidic bonds. For addition of these bonds, it is possible to add freeradical initiators such as organic and inorganic peroxides and/or azo initiators.

Modification of the diene rubber gels, for example by ozonolysis and by halogenation with chlorine, bromine and iodine, is also an option. The amount of the modifying agent used is guided by the efficacy thereof and the demands made on the individual case and is in the range from 0.05% by weight to 30% by weight, based on the total amount of diene rubber gel used, more preferably 0.5% by weight to 10% by weight, based on the total amount of diene rubber gel.

The modification reactions can be conducted at temperatures of 0°C to 180°C, preferably 5°C to 95°C, optionally under pressure of 1 bar to 30 bar (1 bar = 100 000 Pa). The modifications can be undertaken on diene rubber gels in substance or in the form of a dispersion thereof.

The diene rubber gels have an approximately spherical geometry. Primary particles refer, according to DIN 53206:1992-08, to the diene rubber gel particles which are dispersed in the coherent phase and are recognizable as individual species by suitable physical methods (electron microscope) (cf., for example, Römpp Lexikon, Lacke und Druckfarben [Römpp's Lexicon, Coatings and Printing Inks], Georg Thieme Verlag, 1998). An "approximately spherical" geometry means that the dispersed primary particles of the diene rubber gels appear essentially as a circular surface when the composition is viewed, for example with an electron microscope. Since the diene rubber gels essentially do not change shape or morphology on further processing to give sealing compounds of the invention, the remarks made above and below also apply equally to the diene rubber gel-containing sealing compounds of the invention.

In the primary particles of the diene rubber gel present in the sealing compound of the invention, the deviation in the diameter of an individual primary particle, defined as

$$[(d1 - d2) / d2] \times 100,$$

in which d1 and d2 are any two diameters of the primary particle and d1 > d2, is preferably less than 250%, more preferably less than 100%, even more preferably less than 80%, even more preferably less than 50%.

Preferably at least 80%, more preferably at least 90% and even more preferably at least 95% of the primary particles of the diene rubber gel have a deviation in the diameter, defined as

$$[(d1 - d2) / d2] \times 100,$$

in which d1 and d2 are any two diameters of the primary particle and d1 > d2, of less than 250%, preferably less than 100%, even more preferably less than 80%, even more preferably less than 50%.

The aforementioned deviation in the diameters of the individual particles can be determined by the method which follows. First of all, a thin section of the solidified composition of the invention is produced. Then a transmission electron micrograph is taken at a magnification of, for example, 10 000-fold or 200 000-fold. In an area of 833.7 x 828.8 nm, the greatest and smallest diameter in 10 diene rubber gel primary particles are determined as d1 and d2. If the above-defined deviation of at least 80%, more preferably at least 90% and even more preferably at least 95% of the diene rubber gel primary particles analysed in each case is below 250%, preferably below 100%, even more preferably less than 80% and even more preferably below 50%, the diene rubber gel primary particles have the above-defined deviation feature.

If the concentration of the diene rubber gels in the sealing compound is so high that there is significant overlap of the visible diene rubber gel primary particles, the quality of evaluation can be improved by prior suitable dilution of the measurement sample.

In the sealing compound of the invention, the primary particles of the diene rubber gels (A) and (B) and of the gel (H) preferably have an average particle diameter of 5 nm to 500 nm, more preferably of 20 nm to 400 nm, more preferably of 20 nm to 300 nm, more preferably of 20 nm to 250 nm, even more preferably 20 nm to 99 nm, even more preferably 30 nm to 80 nm (diameter figures according to DIN 53206). The production of particularly finely divided diene rubber gels by emulsion polymerization is effected by controlling the reaction parameters in a manner known per se (see, for example, H. G. Elias, Macromolecules, Volume 2, Industrial Polymers and Syntheses, Wiley-VCH Verlag GmbH & Co. KGaA, Weinheim, 2007, page 160 ff.).

Since the morphology of the diene rubber gels (A) and (B) and of the gel (H) essentially does not change in the course of further processing of the composition of the invention, the average particle diameter of the dispersed primary particles in the further processing products obtained with the composition of the invention, such as diene rubber gel-containing sealing compounds, essentially corresponds to the average particle diameter of the dispersed primary particles.

The diene rubber gels (A) and (B) and the gel (H) have insoluble fractions in toluene at 23°C, called the gel content, of at least 60% by weight, more preferably about 80% by weight, even more preferably about 90% by weight.

The diene rubber gels (A) and (B) and the gel (H) appropriately have, in toluene at 23°C, a swelling index of less than about 80, preferably of less than 60, even more preferably of less than 40. For instance, the swelling indices $(Q_i)$ of the diene rubber gels and sealing gels may more preferably be from 5 to 35.

The diene rubber gels (A) and (B) and the gel (H) have a glass transition temperature of -80°C to -50°C, preferably of -75°C to -60°C and more preferably of -75°C to -65°C.

In addition, the diene rubber gels (A) and (B) and the gel (H) preferably have a glass transition range $(\Delta Tg)$ of less than 20°C, preferably less than 15°C, more preferably less than 10°C, especially preferably in the range from 5°C to 10°C.

Cold-polymerized diene rubber gels (A) and (B) and gel (H) may differ in terms of their microstructure from hot-polymerized diene rubber gels.

For example, in the case of 1,3-butadiene as diene monomer used, the difference in the microstructure relates to the relative proportions of 1,3-butadiene incorporated.

The relative proportions of 1,4-trans-, 1,2-vinyl- and 1,4-cis-butadiene units were determined on the basis of the measurement of the relative absorptions of 1,4-trans-, 1,2-vinyl- and 1,4-cis-butadiene bands in the IR spectrum of polymer films of the diene rubber gel. The method is calibrated with rubber samples having a microstructure known accurately from NMR studies. The figures in % by weight are based only on the incorporated butadiene units in the diene rubber gel and together add up to 100% by weight.

Cold polymerized diene rubber gels (A) and (B) and the gel (H) containing 1,3-butadiene as diene each have a proportion of cis-1,4-butadiene units of 8% by weight to 17% by weight, a proportion of trans-1,4-butadiene of 59% by weight to 75% by weight and a proportion of 1,2-vinylbutadiene of 17% by weight to 21% by weight, based on 1,3-butadiene incorporated.

The sealing compounds of the invention comprise the sealing gels of the invention, as described above. In a preferred embodiment of the composition of the invention, the diene rubber gel is based on cold polymerized E-SBR.

The total amount of the sealing gels of the invention in the sealing compound is typically 45 phr to 100 phr, preferably 60 phr to 100 phr, more preferably 70 phr to 100 phr (parts per hundred rubber), the total amount of sealing gel and further natural and/or synthetic rubber corresponding to 100 phr.

The resin (C) used is appropriately one from the group of the hydrocarbon resins. Hydrocarbon resins are understood by those skilled in the art to mean polymers based on carbon and hydrogen which are used preferentially as tackifiers in polymer mixtures. They are miscible (compatible) with the polymer mixture in the amount used and act as diluents/extenders in the mixture. The hydrocarbons resins may be solid or liquid. The hydrocarbon resins may contain aliphatic, cycloaliphatic, aromatic and/or hydrogenated aromatic monomers. Different synthetic and/or natural resins may be used and may be oilbased (mineral oil resins). The Tg of the resins used should be above -30°C. The hydrocarbon resins may also be described as thermoplastic resins which soften and can thus be formed when heated. They may be characterized by the softening point or that temperature at which the resin sticks together, for example in the form of granules.

The resins used with preference have at least one and preferably all of the following properties:

- Tg greater than -30°C,

- softening point greater than 5°C (especially in the range from 5°C to 135°C),

- the number-average molecular weight (Mn) is in the range from 400 g/mol to 2000 g/mol,

- the polydispersity (PDI = Mw/Mn, with Mw = weight-average molecular weight) is less than 3.

The softening point is determined by the "Ring and Ball" method of standard ISO 4625. Mn and Mw can be determined by means of techniques familiar to those skilled in the art, for example gel permeation chromatography (GPC).

Examples of the hydrocarbon resins used are cyclopentadiene (CPD) or dicyclopentadiene (DCPD) homopolymer or cyclopentadiene copolymer resins, terpene homopolymer or copolymer resins, terpene/phenol homopolymer or copolymer resins, homopolymer or copolymer resins of the $C_5$ fraction or $C_9$ fraction, homo- or copolymer resins of α-methylstyrene and mixtures of those described. Particular mention should be made here of the copolymer resins consisting of (D)CPD/vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinylaromatic copolymer resins and mixtures of those described.

The term "terpene" encompasses monomers based on α-pinene, β-pinene and limonene, preference being given to limonene or a mixture of the limonene enantiomers. Suitable vinylaromatics are, for example, styrene, α-methylstyrene, o-methylstyrene, m-methylstyrene, p-methylstyrene, vinyltoluene, p-(tert-butyl)styrene, methoxystyrene, chlorostyrene, hydroxystyrene, vinylmesitylene, divinylbenzene, vinylnaphthalene or any vinylaromatic from the $C_9$ fraction or from the $C_8$ to $C_{10}$ fraction.

The amount of resin (C) in the sealing compound of the invention is typically 10 phr to 60 phr, preferably 20 phr to 50 phr, more preferably 25 phr to 45 phr, and in at least one embodiment less than 30 phr based on the total amount of sealing gel and further natural and/or synthetic rubber (E).

The ageing stabilizers (D) used may be the same substances as described above for the cold emulsion polymerization of the diene rubber gels (A), (B) and gel (H).

The amount of ageing stabilizer (D) in the sealing compound is typically 0.5 phr to 20 phr, preferably 1 phr to 10 phr, more preferably 1 phr to 5 phr, based on the total amount of sealing gel and further natural and/or synthetic rubber (E).

The natural and synthetic rubbers (E) differ from the diene rubber gels and sealing gels and generally have Mooney viscosities ML (1+4)@100 °C (DIN 53 523) of 10 MU to 80 MU, preferably 15 MU to 60 MU.

Preferred rubbers (E) are copolymers based on conjugated diolefins from a group comprising 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof, more preferably from a group comprising natural cis-1,4-polyisoprene, synthetic cis-1,4-polyisoprene, 3,4-polyisoprene, polybutadiene, 1,3-butadiene-acrylonitrile copolymer and mixtures thereof.

Further preferred synthetic rubbers are described, for example, in I. Franta, Elastomers and Rubber Compounding Materials, Elsevier, New York 1989, or else in Ullmann's Encyclopedia of Industrial Chemistry, Vol. A 23, VCH Verlagsgesellschaft, Weinheim 1993. They include

BR - polybutadiene,

Nd-BR - neodymium polybutadiene rubber,

Co-BR - cobalt polybutadiene rubber,

Li-BR - lithium polybutadiene rubber,

Ni-BR - nickel polybutadiene rubber,

Ti-BR - titanium polybutadiene rubber,

PIB - polyisobutylene,

ABR - butadiene/$C_{1-4}$-alkyl acrylate copolymers,

IR - polyisoprene,

SBR - styrene/butadiene copolymers having styrene contents of 1% by weight to 60% by weight, preferably 2% by weight to 50% by weight,

E-SBR - emulsion styrene/butadiene copolymers,

S-SBR - solution styrene/butadiene copolymers,

XSBR - styrene/butadiene copolymers and graft polymers with acrylic acid, methacrylic acid, acrylonitrile, hydroxyethyl acrylate and/or hydroxyethyl methacrylate, glycidyl methacrylate having styrene contents of 2% by weight to 50% by weight and contents of copolymerized polar monomers of 1 % by weight to 30% by weight,

IIR - isobutylene/isoprene copolymers, preferably having isoprene contents of 0.5% by weight to 10% by weight,

BIIR - brominated isobutylene/isoprene copolymers, preferably having bromine content 0.1% by weight to 10% by weight,

CIIR - chlorinated isobutylene/isoprene copolymers, preferably having chlorine content 0.1% by weight to 10% by weight,

NBR - butadiene/acrylonitrile copolymers, typically having acrylonitrile contents of 5% by weight to 60% by weight, preferably 10% by weight to 50% by weight,

HNBR - fully and partly hydrogenated NBR rubber in which up to 100% of the double bonds are hydrogenated,

HXNBR - carboxylated partly and fully hydrogenated nitrile rubbers,

EP(D)M - ethylene/propylene/(diene) copolymers,

EVM- ethylene-vinyl acetate,

and mixtures of these rubbers.

The amount of natural and/or synthetic rubber (E) in sealing compounds of the invention is typically 1 phr to 50 phr, preferably 5 phr to 40 phr, more preferably 10 phr to 30 phr, based on the total amount of sealing gel and further natural and/or synthetic rubber (E).

The total amount of sealing gel and further natural and/or synthetic rubber (E) in the sealing compound is 100 phr.

For the sealing mixture of the invention, plasticizers (F) are typically used in an amount of less than 75 phr. The plasticizer dilutes the matrix consisting of diene elastomers and resins and makes it softer and more supple, in order that the sealing effect of the sealing mixture under cold conditions in particular, typically at temperatures below 0°C, is improved. The plasticizer used typically has a Tg of less than -20°C and preferably less than -40°C.

Suitable plasticizers are any liquid elastomers or lubricant oils, which may be either aromatic or nonaromatic, and any liquid substances which are known for their plasticizing action in elastomers, especially in diene-containing elastomers. Particularly suitable are liquid elastomers having an Mn of 400 to 90 000 g/mol. Examples of lubricant oils are paraffinic oils, naphthenic oils having low or high viscosity, in hydrogenated or non-hydrogenated form, aromatic or DAE (Distilled Aromatic Extracts) oils, MES (Medium Extracted Solvates) oils, TDAE (Treated Distillate Aromatic Extracts) oils, mineral oils, vegetable oils (and oligomers thereof, for example palm oil, rapeseed oil, soya oil or sunflower oil) and mixtures of the oils mentioned.

Also suitable are oils based on polybutene, especially polyisobutylene (PIB)-based oils, and ether-, ester-, phosphate- and sulphonate-based plasticizers, preference being given to esters and phosphates. Preferred phosphate plasticizers are those having 12 to 30 carbon atoms, for example trioctyl phosphate. Preferred ester plasticizers are substances from the group comprising trimellitates, pyromellitates, phthalates, 1,2-cyclohexanedicarboxylates, adipates, azelates, sebacates, glycerol triesters and mixtures thereof. The fatty acids used with preference, in synthetic or natural form (in the case of sunflower oil or rapeseed oil, for example), are those containing more than 50% by weight and more preferably more than 80% by weight of oleic acid. Among the triesters, preference is given to glycerol triesters consisting predominantly to an extent of more than 50% by weight, more preferably more than 80% by weight, of unsaturated $C_{18}$ fatty acids, for example oleic acid, linoleic acid, linolenic acid and mixtures thereof. Such triesters have a high content of oleic acid and are described in the literature as plasticizers for rubber mixtures which are used in tyre treads, for example in US-A-2004/0127617.

Unlike in the case of liquid elastomers, the number-average molecular weight (Mn) of the liquid plasticizer is preferably in the range from 400 to 25 000 g/mol, even more preferably in the range from 800 to 10 000 g/mol (measured by means of GPC).

In summary, preference is given to using liquid plasticizers from the group of the liquid elastomers, polyolefin oils, naphthene oils, paraffin oils, DAE oils, MES oils, TDAE oils, mineral oils, vegetable oils, plasticizers composed of ethers, esters, phosphates, sulphonates and mixtures of those described.

The amount of plasticizer (F) in the sealing compounds of the invention is typically less than 75 phr, preferably 10 phr to 70 phr, more preferably 15 phr to 65 phr, based on the total amount of sealing gel and further natural and/or synthetic rubber (E).

The above-described sealing compounds of the invention may optionally contain additional fillers (G). The additional filler (G) are present in the sealing compounds of the invention typically in an amount of 1 phr to 50 phr, preferably in an amount of 1 phr to 30 phr, more preferably in an amount of 1 phr to 20 phr, based on the total amount of diene rubber gel and further natural and/or synthetic rubbers (E).

A filler is understood in the present invention to mean both reinforcing fillers (typically particles having an average size of less than 500 nm, especially in the range from 20 nm to 200 nm) and non-reinforcing or inert fillers (typically particles having an average size of more than 1 $\mu$m, for example in the range from 2 $\mu$m to 200 $\mu$m). The reinforcing and non-reinforcing fillers are intended to improve cohesion in the sealing compound. These include:

- carbon blacks which are used in the sealing compounds of the invention are appropriately those which are used in tyre production, for example carbon blacks according to ASTM Standard 300, 600, 700 or 900 (N326, N330, N347, N375, N683, N772 or N990), and typically produced by the thermal black, furnace black or gas black method and having BET surface areas of 20 $m^2$/g to 200 $m^2$/g (determined by means of absorption of CTAB as described in ISO 6810 Standard), for example SAF, ISAF, IISAF, HAF, FEF or GPF carbon blacks. Alternatively, it is also possible to use carbon blacks having a surface area of less than 20 $m^2$/g.

- finely divided silicas, produced, for example, by precipitation of solutions of silicates or flame hydrolysis of silicon halides having specific surface areas of 5 to 1000 and preferably 30 $m^2$/g to 400 $m^2$/g (BET surface area measured by the ISO 5794/1 Standard) and having primary particle sizes of 5 to 400 nm. The silicas may optionally also be in the form of mixed oxides with other metal oxides, such as oxides of Al, Mg, Ca, Ba, Zn and Ti.

- synthetic silicates, such as aluminium silicate, alkaline earth metal silicates such as magnesium silicate or calcium silicate, having BET surface areas (measured by the ISO 5794/1 Standard) of 20 $m^2$/g to 400 $m^2$/g and primary particle diameters of 10 nm to 400 nm.

- natural silicates, such as kaolin and other naturally occurring silicas.

- metal oxides, such as zinc oxide, calcium oxide, magnesium oxide, aluminium oxide.

- metal carbonates, such as magnesium carbonate, calcium carbonate, zinc carbonate.

- metal sulphates, such as calcium sulphate, barium sulphate.

- metal hydroxides, such as aluminium hydroxide and magnesium hydroxide.

- colouring fillers or coloured fillers, such as pigments.

- rubber gels based on polychloroprene, NBR and/or polybutadiene having particle sizes of 5 nm to 1000 nm.

The fillers mentioned can be used alone or in a mixture.

Foaming agents (K) which are suitable to be used in the sealing compound in accord with the invention include a blowing agent which is for example a nitrogen-releasing foaming agent that upon heating decomposes and releases nitrogen gas to create the porous foam structure, inert gases (e.g. $N_2$, $CO_2$) dispersed in a mixing apparatus under pressure in the sealing composition, hollow spheres, e.g. hollow glass spheres or, expandable micro balloons.

Most preferred foaming agents (K) are hollow microspheres, which may be hollow glass spheres, mentioned earlier in the present invention, or expandable or rather expanded hollow plastic microspheres based on polyvinylidene chloride copolymers or acrylonitrile copolymers.

The foaming agents mentioned can be used alone or in a mixture.

The foaming agents (K) are present in the sealing compounds of the invention typically in an amount of 1 phr to 50 phr, preferably in an amount of 1 phr to 40 phr, more preferably in an amount of 1.5 phr to 30 phr, based on the total amount of diene rubber gel and further natural and/or synthetic rubbers (E).

The sealing compounds of the invention may optionally contain further rubber auxiliaries which are typically used in rubber mixtures, for example one or more further crosslinkers, accelerators, thermal stabilizers, light stabilizers, ozone stabilizers, processing aids, extenders, organic acids or retardants.

The rubber auxiliaries can be used individually or in mixtures.

The rubber auxiliaries are used in standard amounts guided by the end use among other factors. Standard amounts are, for example, amounts of 0.1 phr to 50 phr.

In a preferred embodiment, the sealing compound of the invention may further comprise

- 0.5 phr to 20 phr, preferably 1 phr to 10 phr and more preferably 1 phr to 5 phr of at least one ageing stabilizer (D),

- less than 75 phr, preferably 10 phr to 70 phr and more preferably 15 phr to 65 phr of at least one plasticizer (F),

- optionally 1 phr to 50 phr, preferably 1 phr to 30 phr and more preferably 1 phr to 20 phr of at least one filler (G),

- optionally 1 phr to 50 phr, preferably 1 phr to 40 phr and more preferably 1.5 phr to 30 phr of at least one foaming agent (K).

based in each case on the total amount of sealing gel and further natural and/or synthetic rubbers (E).

In one preferred embodiment the sealing compound includes the foaming agent (K) in an amount of 1 phr to 50 phr, preferably 1 phr to 40 phr and more preferably 1.5 phr to 30 phr based on the total amount of sealing gel and further natural and/or synthetic rubbers (E).

The foamed sealing compound of the invention preferably has at least one of the preferred properties described hereinafter.

The foamed sealing compound of the invention typically has a Mooney viscosity (ML1+4@100 °C) of 5 MU up to 50 MU, preferably 8 MU up to 40 MU. The Mooney viscosity is determined by the standard ASTM D1646 (1999) and measures the torque of the sample at elevated temperature. It has been found to be useful to calender the sealing compound beforehand. For this purpose, the sealing compound is processed on a roller at a roller temperature of $T \leq$ 60°C to give a rolled sheet. The cylindrical sample punched out is placed into the heating chamber and heated up to the desired temperature. After a preheating time of one minute, the rotor rotates at a constant 2 revolutions/minute and the torque is measured after four minutes. The Mooney viscosity measured (ML 1+4) is in "Mooney units" (MU, with 100 MU = 8.3 Nm).

The foamed sealing compound of the invention typically has a density of 0.001 to 0.935 g/mL, and more preferably 0.1 to 0.932 g/mL.

The tan $\delta_f$ @ 20°C of a foamed sealing compound in accordance with the invention is greater than 0.003 preferably above 0.005, and particularly preferred above 0.010, as measured by the Oberst Measurement method.

The sealing compound should exert a minimum influence on the rolling resistance of the tyre. For this purpose, the loss factor tan $\delta$ at 60°C, which is established in industry as a rolling resistance indicator, is employed as the measurement parameter, this being determined by dynamic-mechanical analysis (DMA) with a rheometer. From the measurement, the temperature-dependent storage and loss moduli G' and G" are obtained. The temperature-dependent tan $\delta$ value is calculated from the quotient of loss modulus to storage modulus. The tan $\delta$ value at 60°C and 10 Hz for the sealing compounds of the invention is typically less than 0.35, preferably less than 0.30 and more preferably less than 0.25.

The invention further relates to a process for producing sealing compounds. In this case, the sealing gel of the invention can also be produced by mixing latices of the diene rubber gels (A) and (B), or (A) and/or (B), with gel (H) and co-processing the mixture. Constituents of the sealing compound can likewise be produced by mixing the diene rubber gel/sealing gel latices with latices of the natural rubbers and/or synthetic rubbers and by mixing further sealing compound constituents, preferably in the form of suspensions thereof, and processing them together. For this purpose, the sealing compound of the invention can be produced in a masterbatch. The sealing compounds of the invention, composed of at least one sealing gel and at least one resin (C), can be produced in various ways. For example, it is possible to mix the solid or liquid individual components. Examples of equipment suitable for the purpose are rollers, internal mixers or mixing extruders. In a first step, the sealing gels are mixed with at least one resin (C) at a temperature (1st mixing temperature) which is above the softening temperature of the resin. It should be noted here that the temperature is not the target temperature for the mixer but the actual temperature of the mixture.

It is optionally possible to add various additives to the masterbatch, for example stabilizers, pigments, ageing stabilizers, etc. The masterbatch can be produced in a compounding system, for example in a paddle mixer, in an open two-roll mill, an extruder or any other mixing system capable of sufficient mixing and kneading of the various components of the sealing compound, such that a homogeneous mixture can be obtained. Preference is given to using a screw extruder with or without a constant screw helix, which can introduce high shear into the mixture.

The resin (C) may be solid or liquid in the initial phase prior to the addition to the sealing gels, which are solid. In the blending of the resin (C) with the sealing gel during the mixing, preference is given to a liquid form of the resin in order to obtain better mixing. This is achieved by the heating of the resin above the softening temperature. Depending on the resin used, the mixing temperature is typically above 70°C, preferably above 80°C, for example between 100°C and 150°C. Preferably, the resin (C) is metered into the mixer under pressure in the form of an injection of the liquid resin with exclusion of oxygen. This step can be combined with the mixing at the 1st mixing temperature.

Further processing steps are preferably effected at a temperature below the softening temperature of the resin (C), for example at 50°C (2nd mixing temperature).

One example for production of the sealing compound as a masterbatch in a screw extruder is as follows:

a single-screw extruder is used, having a 1 st metered addition for the mixture constituents and a 2nd metered addition (metering pump) for the liquefied resin (C). The mixing is effected by rotating the screw, and the mixture components experience high shear. The mixture then passes to the homogenizer with a chopper tool. Downstream of this zone, the masterbatch is finally extruded in the desired shape through a simple extrusion head. The sealing mixture obtained is, for example, packed between two silicone-coated films and cooled down, and is ready to use. The extrudate can also be conducted beforehand to a twin-roller system in order to be able to meter in further mixture ingredients (pigments, fillers, etc.) if necessary in this step. The metered addition may be continuous. The roll temperature is preferably below 100°C. The sealing mixture is packed analogously. It is possible to produce this sealing mixture under industrial conditions without entering into the risk of contamination/soiling of the tools, for example as a result of sticking of the sealing compound to the roll.

The application of the sealing layer to the tyre may follow the vulcanization of the tyre. Typical methods of applying the sealing layer are described, for example, in US-A-5,295,525. The sealing compounds based on diene rubber gels may be applied, for example, to the tyre lining in a continuous process without having to be subjected to a vulcanization. The sealing compound may be extruded, for example, as a sealing layer or strip on the inside of the tyre. In an alternative embodiment, the sealing compound may be processed as a strip which is then bonded to the inside of the tyre.

In a further alternative embodiment, the sealing compound can be prepared as a solvent cement which is sprayed, for example, onto the inside of the tyre. A further alternative mode of application as a laminate is described in US-A-4,913,209.

The invention therefore further relates to the use of the sealing gels in sealing compounds, especially to improve the adhesion and cohesion properties.

The invention further relates to the use of sealing gel-containing sealing compounds as sealing layer in tyres, preferably on inner liners of pneumatic motor vehicle tyres.

The present invention thus further provides a pneumatic motor vehicle tyre comprising a sealing gel-containing sealing compound of the invention.

The invention also relates to the use of the sealing gels in sealing compounds for seals of hollow bodies and membranes.

The advantage of the invention lies especially in the excellent cohesion and adhesion properties and in the low rolling resistance of the sealing compound.

The examples which follow describe the invention but without limiting it.

Examples:

In the examples which follow, the following substances are used:

| Name | Source |
| --- | --- |
| Styrene (ST) | Azelis |
| 1,3-Butadiene unstabilized (BDN) | Air Liquide Deutschland GmbH |
| tert-Dodecyl mercaptan (tDDM) | Phillips |
| Dresinate 835 (Abieta™ DRS 835) (emulsifier) | Arizona Chemical B.K. |
| Oleic acid | Merck KGaA |
| Trimethylolpropane trimethylacrylate (TMPTMA) | Sigma-Aldrich Chemie GmbH |
| Divinylbenzene (DVB) | Sigma-Aldrich Chemie GmbH |
| Potassium hydroxide (KOH) | Riedel-de-Haen |
| Potassium chloride (KCl) | Riedel-de-Haen |
| p-Menthane hydroperoxide (Trigonox® NT 50) | Akzo-Degussa |
| Sodium phosphate dodecahydrate ($Na_3PO_4 * 12 H_2O$) | Merck KGaA |
| Rongalit® C (for synthesis) | Merck KGaA |
| Ethylenediaminetetraacetic acid EDTA (ultrapure) | Merck KGaA |
| Iron(II) sulphate heptahydrate ($FeSO_4 * 7 H_2O$) | Merck KGaA |
| Sodium chloride (NaCl) | Merck KGaA |

(continued)

| Name | Source |
|------|--------|
| Phosphoric acid (H$_3$PO$_4$) | VWR |
| Calcium chloride anhydrous (CaCl$_2$) | Merck KGaA |
| E-SBR rubber (Buna SE 1502 H) | LANXESS Deutschland GmbH |
| Escorez™ 2173 (hydrocarbon resin) | ExxonMobil Chemical |
| TDAE oil Vivatec® 500 (plasticizer) | LANXESS Deutschland GmbH |
| Vulkanox® HS LG (ageing stabilizer) | LANXESS Deutschland GmbH |
| Vulkanox® MB2/MG-C (ageing stabilizer) | LANXESS Deutschland GmbH |
| Vulkanox® 4020 (ageing stabilizer) | LANXESS Deutschland GmbH |
| Regal SRF (carbon black) | Cabot |
| Microlen® Red 4060 MC | BASF |
| 3M™ Glass Bubbles iM16K (foaming agent (K)) | 3M |
| Expancel 051 DU 40 (foaming agent (K)) | AkzoNobel |

Test methods:

CHARACTERIZATION OF THE DIENE RUBBER GELS AND SEALING GELS

Determination of conversion: The conversion of the cold emulsion polymerization is calculated from the solids content of the latex solution. The determination of solids in the latex is effected by means of a halogen moisture analyser (Mettler Toledo, Halogen Moisture Analyzer HG63). For this purpose, an aluminium pan (Mettler, article no. 13865) is inserted into the sample holder and tared. Then an HAF1 glass fibre filter (Mettler, article no. 214464) is placed on top and the measurement is started. Typically, the glass fibre filter in the course of storage absorbs about 0.5% air humidity. Subsequently, the aluminium pan with the dried glass fibre filter is inserted into the sample holder and the balance is tared. About 1 g to 1.5 g of latex are weighed in and distributed over a maximum area in order to enable complete absorption of the liquid through the glass fibre filter. Then the measurement is started. When the weight loss of the sample is less than 1 mg per 50 seconds, the measurement is ended and the solids content is noted. The measured solids content of the latex and the theoretical solids content of the latex at the end of the polymerization are used to calculate the conversion of the emulsion polymerization.

Determination of gel content: The fraction insoluble in toluene is determined in toluene at 23°C. This is done by swelling 250 mg of the diene rubber gel in 20 ml of toluene with agitation at 23°C for 24 hours. After centrifugation at 20 000 rpm, the insoluble fraction is removed and dried. The gel content is calculated from the quotient of the dried residue and the starting weight and is reported in per cent.

Glass transition temperature: The glass transition temperatures (Tg) and the breadth of the glass transition (ΔTg) of the diene rubber gels are determined by differential thermoanalysis (DTA, differential scanning calorimetry (DSC)) on a 2003 Perkin Elmer DSC-7 calorimeter. For the determination of Tg and ΔTg, two cooling/heating cycles are conducted. Tg and ΔTg are determined in the second heating cycle. For the determinations, 10 mg to 12 mg of the diene rubber gels are used in a DSC sample holder (standard aluminium pan) from Perkin Elmer. The first DSC cycle is conducted by first cooling the sample down to -100°C with liquid nitrogen and then heating it up to +150°C at a rate of 20 K/min. The second DSC cycle is commenced by immediate cooling of the sample as soon as a sample temperature of +150°C has been achieved. The cooling is effected at a rate of about 320 K/min. In the second heating cycle, the sample is heated up once more to +150°C as in the first cycle. The heating rate in the second cycle is again 20 K/min. Tg and ΔTg are determined from the graph of the DSC curve of the second heating operation. For this purpose, three straight lines are applied to the DSC curve. The first straight line is applied to the part of the DSC curve below Tg, the second straight line to the curve section with a turning point that runs through Tg, and the third straight line to the curve section of the DSC curve above Tg. In this way, three straight lines with two points of intersection are obtained. Each point of intersection is characterized by a characteristic temperature. The glass transition temperature Tg is obtained as the mean of these two temperatures and the breadth of the glass transition ΔTg is obtained from the difference between the two temperatures.

To determine the swelling index, 250 mg of the diene rubber gel are swollen under agitation in 25 ml of toluene at 23°C for 24 h. The gel is centrifuged off at 20 000 rpm, weighed and then dried to constant weight at 70°C and weighed once again. The swelling index is calculated as follows:

$$Qi = \text{wet weight of the gel/dry weight of the gel.}$$

The Mooney viscosity of the diene rubber gels and the sealing gels is determined by the standard ASTM D1646 (1999) and measures the torque of the sample at elevated temperature using a 1999 Alpha Technologies MV 2000 Mooney viscometer (manufacturer serial number: 25AlH2753). It has been found to be useful to calender the diene rubber gel or the sealing gel beforehand. For this purpose, the diene rubber gel or the sealing gel is processed on a roller at a roller temperature of T ≤ 60°C to give a rolled sheet. The roller gap is varied between 1 mm and 3 mm, the friction is -10% and the roller revolutions per minute are 7-8 rpm. The measurement is conducted as follows: The cylindrical sample punched out is placed into the heating chamber and heated up to the desired temperature (here 100°C). After a preheating time of one minute, the rotor (of size L) rotates at a constant 2 revolutions/minute and the torque is measured after four minutes. The Mooney viscosity measured (ML 1+4) is in "Mooney units" (MU, with 100 MU = 8.3 Nm).

CHARACTERIZATION OF THE SEALING COMPOUND

The determination of the loss factor tan $\delta$ at 60°C as an indicator of rolling resistance is effected on the basis of standard DIN-ISO 6721-1 and 6721-2. The preparation of the sealing compound for the measurement of the loss factor as an indicator of rolling resistance is conducted as follows: The sealing compound is processed on a roller at a roller temperature of T ≥ 60°C to give a rolled sheet. The sheet is subsequently passed through a roll gap of 0.5 mm, which results in a sheet having a thickness of ≤ 3.5 mm. A sample of size 10 cm x 10 cm is taken from this sheet and pressed in a mould of 10 cm x 10 cm x 0.1 cm at a pressure of 120 bar and a temperature T ≥ 105°C for 10 min. After cooling to room temperature within 10 minutes, a round sample having a diameter of 8 mm is punched out of the pressed material for dynamic-mechanical measurements. This sample is fixed between two plates. Before the temperature run, a time run is conducted on the sample for a period of 10 min at 100°C and an initial force of 2 N. Subsequently, a temperature run is conducted with an initial force of 2 N and maximum deformation of 2% in the range from -100°C to 170°C at a constant frequency of 10 Hz and a heating rate of 3 K/min.

The density of the sealing compounds is measured by hydrodensitometry according to DIN 53479. Based on Archimedes' principle, the sample is weighed in air and water and the density of the sample is calculated.

The acoustic damping properties of the sealing compounds are analyzed by Dr. Oberst-Measurements according to DIN 53440, part 3, method B (DIN EN ISO 6721-3 - Plastics - Determination of dynamic mechanical properties - Part 3: Flexural vibration; resonance-curve, December 1996).

The temperature-dependent loss factor and the average complex bending elastic modulus of attenuating coatings deposited on a carrier material, in this case a steel strip, are determined.

The test is performed on rectangular bars suspended horizontally by fine fibres at vibrational nodes (method B). The apparatus consists of devices for suspending the specimen, electronic devices (frequency generator and recording device) for exciting the specimen to forced bending vibration and for measuring the frequency as well as the velocity amplitude of the sample. For excitation and detection of the vibrations, two electromagnetic transducers are situated near the ends of the sample.

The sample consists of steel strip coated with a sealing compound. The sealing compound is pressed to a thickness of 5 mm at 105°C and 120 bar for 10 min and cooled to room temperature under pressure over a period of 12 h. The pressed sealing compound which has been cut to an edge length of 15 cm x 1 cm is positioned on the steel strip of dimensions 15 cm x 1 cm x 0.1 cm) which has been cleaned before with acetone.

The sample is placed in the measurement device which excites the flexural vibration of the sample on one side of the sample without contact (typical frequency range: 10 Hz to 1000 Hz). The resulting state of vibration of the sample is measured. By means of a FFT analyzer, the resonance curve can be calculated. The resonance curve describes the spectra transfer function between both ends of the sample.

The bending loss factor of the attenuating coating deposited on the steel strip becomes

$$\tan \delta_f = \frac{\Delta f_i}{f_{r,i}}.$$

Where

- $f_{r,i}$ is the $i^{th}$ maximum of the measured transfer function in Hz and
- $\Delta f_i$ is the bandwidth in Hz (corresponds to the difference of the frequencies on both sides of the $i^{th}$ resonance frequency $f_{r,i}$, where the amplitude of the transfer function is 3 dB smaller than the amplitude at the $i^{th}$ maximum).

The sample is suspended on two strings at the nodes of the flexural vibration. The distance

$$L_i = \begin{cases} 0.224 \cdot l & |i = 1 \\ 0.660 \cdot \dfrac{l}{2i + 1} & |i > 1 \end{cases}$$

of the $i^{th}$ node of the vibration to the end of the sample depends on the total length of the sample. For the sample length of l=150 mm during this investigation the distance of the 1st node of the fundamental resonance frequency to the sample end is $L_1$=33.6 mm.

The complex bending elastic modulus is determined by using the average density $\rho$ of the sample consisting of attenuating coating and steel strip. The bending storage modulus is given by

$$E_f' = \left( 4\pi\sqrt{3\rho}\, \frac{l^2}{h} \right)^2 \left( \frac{f_{r,i}}{k_i^2} \right)^2,$$

The bending loss modulus is defined as

$$E_f'' = E_f' \cdot \tan\delta_f$$

Where

- $h$ is the thickness of the sample and
- $-\ k_i^2$ is a constant depending on the measurement method; for method B $k_i^2 = 22.4$.

The sample, the supporting device and the electromagnetic transducers are enclosed in a temperature-controlled chamber at 20°C. Reference measurements are performed only with the steel strip without any coating.

The devices used for the measurement setup including the climate chamber were 4-channel-data-acquisition unit Apollo Plus from SINUS Messtechnik GmbH with 24 bits per sample, class 1 sound level meter in accordance with IEC 61672 1, 1/3-octaves of class 0 in accordance with IEC 61260, analysis software SAMURAI from SINUS Messtechnik GmbH, version 2.6, amplifier Apart-AudioMB-150, climate chamber Mytron WB 120 K.

Production and characterization of the diene rubber gels and sealing gels

There follows a description of the production of the cold-polymerized diene rubber gels (A) of the invention and (B) and the diene rubber gels A and B were used in the further examples.

The diene rubber gels A and B are produced by emulsion polymerization, using 1,3-butadiene (BDN) and styrene (ST) as monomers and trimethylolpropane trimethacrylate (TMPTMA) and/or divinylbenzene (DVB) as crosslinkers. The monomers and essential formulation constituents used for the production of the diene rubber gels (A) and (B) are summarized in the following table:

Table 1:

| Diene rubber gel | Solvent | Emulsifiers | | Monomers | | Crosslinker | |
|---|---|---|---|---|---|---|---|
| | Water [g] | Oleic acid [g] | Dresinate [g] | BDN [g] | ST [g] | TMPTMA [g] | DVB [g] |
| A | 11939 | 80 | 171 | 3492 | 400 | 112.5 | -- |
| B | 11939 | 80 | 171 | 3528 | 400 | -- | 90.0 |

(a) Emulsion polymerization and crosslinking of the SBR rubber

Examples A and B :

The figures relate to 100% pure feedstocks. The diene rubber gels are produced in a 20 l autoclave with stirrer system. Monomers, crosslinker, emulsifiers and the amounts of water specified in the table (minus the amounts of water required for the production of the aqueous premix and initiator solutions) were initially charged in the autoclave.

After adjusting the temperature of the reaction mixture to 10°C, freshly produced aqueous premix solution (4% strength) was introduced into the autoclave to activate the initiator. These premix solutions consisted of 1.10 g of ethylenediaminetetraacetic acid, 0.86 g of iron(II) sulphate * 7 $H_2O$ (calculated without water of crystallization) and 2.07 g of Rongalit® C (sodium formaldehydesulphoxylate 2-hydrate, calculated without water of crystallization). At first, half the solution was added. Also metered into the reactor for initiation was 0.058% by weight (again based on the sum total of all the monomers) of p-menthane hydroperoxide (Trigonox® NT 50 from Akzo-Degussa), which was emulsified in 200 ml of the emulsifier solution prepared in the reactor. On attainment of 30% conversion, the remaining 50% of the premix solution was metered in.

The temperature was controlled during the polymerization by adjusting the coolant volume and coolant temperature at 10 ± 0.5°C.

On attainment of a polymerization conversion of more than 85% (typically: 90% to 100%), the polymerization was stopped by adding an aqueous solution of 2.35 g of diethylhydroxylamine. To remove volatile constituents from the latex, the latex was stripped with steam.

(b) Workup of the diene rubber gels

The precipitation of the diene rubber gel was conducted as follows:

A 15 l stainless steel pot equipped with a dissolver stirrer was initially charged with 3 kg of latex while stirring, and heated to 60°C. Then 1 kg of a 20% NaCl solution (333 g/kg of latex) was added, forming a very fine coagulate. Subsequently, the suspension was heated to 75°C and 25% phosphoric acid was slowly added dropwise. In the course of this, it was important that the dissolver stirrer ran at maximum stirrer speed (1500 rpm), since the coagulate otherwise conglutinated readily to a large ball. In the neutral pH range, the suspension formed a foam, which disappeared completely in the acidic range. The precipitation was complete and the serum was colourless and clear.

Then the coagulate was filtered through a 200 µm cloth and then washed to neutrality with demineralized water. Two washing cycles were sufficient for the purpose.

Subsequently, the polymer was dried down to a residual moisture content of ≤ 0.5% in a vacuum drying cabinet at 55°C.

The analytical data, determined by the methods described above, are reproduced in Table 2 below.

Table 2:

|   | Conver sion [%] | Primary particle diameter [nm] | Gel content [%] | Swelling index QI | Tg [°C] | ΔTg [°C] | (ML1+4) @100 °C [MU] |
|---|---|---|---|---|---|---|---|
| A | 93 | 42 | 88 | 24 | -70 | 7 | 183 |
| B | 92 | 41 | 94 | 12 | -69 | 6 | 77 |

The cold-polymerized SBR rubber gels (A) and (B) shown in Table 2, at a conversion of more than 85%, have a gel content of more than 75% and a Mooney viscosity ((ML1+4@100°C) of more than 75 MU.

Cold-polymerized SBR rubber gels of the invention differ from the hot-polymerized SBR rubber gels that are not in accordance with the invention in terms of microstructure. The microstructure of the polymerized SBR rubber gels A and B of the invention is compiled in Table 3 below. The measurements were conducted on a 1999 Thermo Scientific Nicolet FTIR Nexus instrument.

Table 3:

| Diene rubber gel | cis [% by wt.] | trans [% by wt.] | vinyl [% by wt.] |
|---|---|---|---|
| A | 13.9 | 66.3 | 19.8 |

(continued)

| Diene rubber gel | cis [% by wt.] | trans [% by wt.] | vinyl [% by wt.] |
|---|---|---|---|
| B | 14.9 | 64.8 | 20.3 |

Polymerized diene rubber gels (A) and (B) of the invention have a proportion of cis-1,4-butadiene units of 8% by weight to 17% by weight, a proportion of trans-1,4-butadiene units of 59% by weight to 75% by weight and a proportion of 1,2-vinylbutadiene units of 17% by weight to 21 % by weight, based on 1,3-butadiene incorporated.

Production and characterization of sealing gels M of the invention.

The sealing gel were produced on the basis of A1 and B1 on a Collin W 150 G roll mill built in 04/2013. The roll temperature during the mixing operation was ≤ 60°C. The roller gap was varied between 1 mm and 3 mm, the friction was -10% and the roller revolutions per minute were 7 rpm to 8 rpm.

The composition of the sealing gels (M) of the invention eis specified in Table 4 below. The determination of the Mooney viscosity was determined by the above-described method with a rolled sheet using an Alpha Technologies MV 2000 Mooney viscometer.

The amounts of the individual components are reported in % by weight. By varying the composition of the diene rubber gels, it is possible to control the Mooney viscosity of the sealing gel.

Table 4:

| Sealing gel | A [% by wt.] | B [% by wt.] | (ML1+4) @ 100 °C [MU] |
|---|---|---|---|
| M | 30 | 70 | 103 |

Production and characterization of the sealing compounds VV1 that is not in accordance with the invention and the sealing compounds V1 to V5 of the invention.

The sealing compound was produced on a Collin W 150 G roll mill built in 04/2013. The roll temperature during the mixing operation was 90°C. The roller gap was varied between 1 mm and 3 mm, the friction was -10% and the roller revolutions per minute were 7 rpm to 8 rpm.

For the production of the sealing compounds V1 and V2 of the invention, the diene rubber gels A and B, were first each mixed together homogeneously on the roll as described above to give the sealing gels M. Subsequently, rubber (E) was added in each case and well-dispersed. Thereafter, resin (C) was added gradually in small portions, followed by the ageing stabilizers (D), the pigment (G), and lastly the plasticizer (F). Rolling was continued until the mixture appeared homogeneous to the eye. The compound was cooled down to 60 °C and foaming agent (K) was added and mixed until the mixture appeared homogeneous to the eye. The sealing compounds were then expanded for 10 minutes at 105 °C to give foamed sealing compounds.

For the production of the sealing compounds V3 and V4 of the invention, the diene rubber gels A and B, were first each mixed together homogeneously on the roll as described above to give the sealing gels M. Subsequently, rubber (E) was added in each case and well-dispersed. Thereafter, resin (C) was added gradually in small portions, followed by the ageing stabilizers (D), the pigment (G), foaming agent (K) and lastly the plasticizer (F). Rolling was continued until the mixture appeared homogeneous to the eye.

For the production of the sealing compounds V5 of the invention, the diene rubber gel B was mixed with rubber (E). Thereafter, resin (C) was added gradually in small portions, followed by the ageing stabilizers (D), the pigment (G), foaming agent (K) and lastly the plasticizer (F). Rolling was continued until the mixture appeared homogeneous to the eye.

The composition of the sealing compounds VV1 that is not in accordance with the invention and of the sealing compounds V1 to V5 of the invention and the amounts thereof are specified in Table 5. The amounts of the individual components are reported in phr.

Table 5:

| Sealing compound | VV1 | V1 | V2 | V3 | V4 | V5 |
|---|---|---|---|---|---|---|
| Diene rubber gel A [phr] | 21 | 25.5 | 25.5 | 25.5 | 25.5 | 0 |
| Diene rubber gel B [phr] | 49 | 59.5 | 59.5 | 59.5 | 59.5 | 85 |
| Resin (C) Escorez 2173 [phr] | 30 | 30 | 30 | 30 | 30 | 30 |
| Ageing stabilizer (D) Vulkanox HS LG [phr] | 1.5 | 3 | 3 | 3 | 3 | 3 |
| Ageing stabilizer (D) Vulkanox MB2/MG-C [phr] | 1.5 | 0 | 0 | 0 | 0 | 0 |

(continued)

| Sealing compound | VV1 | V1 | V2 | V3 | V4 | V5 |
|---|---|---|---|---|---|---|
| Ageing stabilizer (D) Vulkanox 4020 [phr] | 0 | 3 | 3 | 3 | 3 | 3 |
| Rubber(E) Buna SE 1502H [phr] | 30 | 15 | 15 | 15 | 15 | 15 |
| Plasticizer (F) TDAE oil Vivatec 500 [phr] | 30 | 55 | 55 | 50 | 65 | 30 |
| Foaming agent (K) Expancel 051 DU 40[phr] | 0 | 5 | 2.5 | 0 | 0 | 0 |
| Foaming agent (K) 3M™ Glass Bubbles iM16K [phr] | 0 | 0 | 0 | 10 | 25 | 25 |
| Pigment (G) Regal SRF [phr] | 0 | 3 | 3 | 3 | 3 | 3 |
| Pigment (G) Microlen® Red 4060 MC [phr] | 1 | 0 | 0 | 0 | 0 | 0 |

Table 6:

|  | tan $\delta_f$ @ 20°C |
|---|---|
| Without coating | 0.003 |
| With W1 | 0.001 |
| With V1 | 0.019 |
| With V2 | 0.010 |
| With V3 | 0.010 |
| With V4 | 0.011 |
| With V5 | 0.006 |

The acoustic damping properties of the compounds are analyzed by Dr. Oberst-Measurements according to DIN 53440, part 3, method B.

The characterization of the sealing compounds VV1 to VV3 and V1 to V5 is compiled in Table 7 below.

Table 7:

| Sealing compound | VV1 | VV2 | VV3 | V1 | V2 | V3 | V4 | V5 |
|---|---|---|---|---|---|---|---|---|
| (ML1+4) @ 100 °C [MU] | 20 | 4 | 10 | 16 | 12 | 10 | 12 | 13 |
| Density [g/mL] | 0.937 | 0.958 | 0.969 | 0.924 | 0.929 | 0.901 | 0.846 | 0.843 |
| tan $\delta$ @ 60°C | 0.25 | 0.58 | 0.38 | 0.27 | 0.27 | 0.27 | 0.30 | 0.31 |
| VV2 is sealing material available as part of the Continental Premium Contact 2 tyre from Continental. VV3 is sealing material available as part of the Michelin Primacy 3 Selfseal tyre from Michelin. | | | | | | | | |

The Mooney viscosity is determined by the methods described above on an Alpha Technologies MV 2000 Mooney viscometer.

The tan $\delta$ value is determined by the methods described above by means of an ARES-G2 rheometer from TA Instruments.

The density is determined by hydrodensitometry according to DIN 53479.

The determination of the failure temperature of the particular sealing compound by means of the SAFT test was effected in a double determination on two specimens of the particular sealing compound. The measurements were conducted by the methods described above on a ChemInstruments HT-8 shear tester in a Memmert UF 110 Plus heating cabinet. The mean values for the results are compiled in Table 9 and 10 below.

Table 9:

|  | VV1 | V1 | V2 | V3 | V4 | V5 |
|---|---|---|---|---|---|---|
| Failure temperature [°C] | 91 | 114 | 60 | 53 | 40 | 88 |

If the sealing compound of the invention is applied to the tyre liner as a film of thickness 3 mm and the tyre is filled with air such that it has an air pressure of 2.5 bar, the sealing compound has a self-sealing effect when a nail which has been hammered in (to diameter 5 mm) is pulled out. The air pressure in the tyre is allowed to decrease up to 1.0 bar and remains constant for at least one week.

## Claims

1.  Foamed sealing compounds, comprising:

    a sealing gel in an amount of 45 phr to 100 phr, preferably 60 phr to 100 phr and more preferably 70 phr to 100 phr, resin (C) in an amount of 10 phr to 60 phr, preferably 20 phr to 50 phr and more preferably 25 phr to 45 phr; a natural rubber or synthetic rubber (E) in an amount of 1 to 50 phr, preferably 5 phr to 40 phr and more preferably 10 phr to 30 phr; and
    said phr being based in each case on the total amount of sealing gel and the natural and/or synthetic rubber (E) in the sealing compound,
    wherein the sealing compound has a density of 0.001 to 0.935 g/mL, and more preferably 0.100 to 0.932 g/mL, and
    wherein, said sealing gel is

    i) in the form of a mixture comprising diene rubber gel (A) obtainable by emulsion polymerization of at least one conjugated diene in the presence of at least one crosslinker (I) and diene rubber gel (B) obtainable by emulsion polymerization of at least one conjugated diene in the presence of at least one crosslinker (II) or
    ii) obtainable by emulsion polymerization of at least one conjugated diene in the presence of at least one crosslinker (I) and/or in the presence of at least one crosslinker (II),

    where
    crosslinkers (I) are acrylates and methacrylates of polyhydric, preferably di- to tetrahydric, $C_2$-$C_{20}$ alcohols, preferably selected from the group consisting of acrylates and methacrylates of ethylene glycol, propane-1,2-diol, butane-1,4-diol, hexanediol, polyethylene glycol having 2 to 8 and preferably 2 to 4 oxyethylene units, neopentyl glycol, bisphenol A, glycerol, trimethylolpropane, pentaerythritol, sorbitol with unsaturated polyesters of aliphatic di- and polyols and mixtures thereof, more preferably selected from the group consisting of acrylates and methacrylates of propane-1,2-diol, butane-1,4-diol, neopentyl glycol, bisphenol A, glycerol, trimethylolpropane and pentaerythritol, and crosslinker (I) is most preferably trimethylolpropane trimethacrylate (TMPTMA), and
    crosslinkers (II) are compounds having two or more vinyl, allyl or isopropenyl groups or one maleimide unit, preferably selected from the group consisting of diisopropenylbenzene, divinylbenzene (DVB), divinyl ether, divinyl sulphone, diallyl phthalate, trivinylbenzene, triallyl cyanurate, triallyl isocyanurate, 1,2-polybutadiene, N,N'-m-phenylenemaleimide, tolylene-2,4-bis(maleimide) and triallyl trimellitate and mixtures thereof, more preferably selected from the group of diisopropenylbenzene, divinylbenzene and trivinylbenzene, and crosslinker (II) is most preferably divinylbenzene.

2.  Foamed sealing compounds according to Claim 1,
    having a tan $\delta_f$ @ 20°C greater than 0.003 preferably above 0.005, and particularly preferred above 0.010, as measured by the Oberst Measurement method.

3.  Foamed sealing compounds according to any one of Claims 1 to 2, further comprising
    a blowing agent in an amount of 1 phr to 50 phr, preferably in an amount of 1 phr to 40 phr, more preferably in an amount of 1.5 phr to 30 phr,
    wherein the blowing agent comprises hollow microspheres, preferably on hollow glass spheres, plastic hollow spheres based on phenolic resins, ceramic hollow spheres, hollow glass spheres or expanded hollow plastic microspheres based on polyvinylidene chloride copolymers or acrylonitrile copolymers and mixtures thereof.

4.  Foamed sealing compounds according to any one of Claims 1 to 3,
    wherein the sealing gel is obtainable by emulsion polymerization of at least one conjugated diene in the presence of at least one crosslinker (I) and simultaneously in the presence of at least one crosslinker (II).

5.  Foamed sealing compounds according to any of Claims 1 to 4,

wherein further monomers are polymerized in the emulsion polymerization of the at least one conjugated diene, wherein said further monomers are 1,3-butadiene, vinylaromatics, preferably styrene, 2-methylstyrene, 3-methylstyrene, 4-methylstyrene, α-methylstyrene, 2,4-dimethylstyrene, 2,4-diisopropylstyrene, 4-tert-butylstyrene or tert-butoxystyrene, more preferably styrene, acrylonitrile, isoprene, esters of acrylic acid and methacrylic acid, tetrafluoroethylene, vinylidene fluoride, hexafluoropropene, 2-chlorobutadiene, 2,3-dichlorobutadiene, carboxylic acids containing double bonds, preferably acrylic acid, methacrylic acid, maleic acid or itaconic acid, hydroxyl compounds containing double bonds, preferably hydroxyethyl methacrylate, hydroxyethyl acrylate or hydroxybutyl methacrylate, amine-functionalized (meth)acrylates, glycidyl methacrylate, acrolein, N-vinyl-2-pyrrolidone, N-allylurea, N-allylthiourea, secondary amino (meth)acrylates, preferably 2-tert-butylaminoethyl methacrylate and 2-tert-butylaminoethylmethacrylamide, or vinylic heteroaromatics such as 2-, 4-vinylpyridine and 1-vinylimidazole.

6. Foamed sealing compounds according to Claim 5,
   wherein the at least one conjugated diene is 1,3-butadiene and the further monomer is styrene, and
   wherein said emulsion polymerization is performed at 5°C to 20°C.

7. Foamed sealing compounds according to any of Claims 1 to 6,
   wherein 1,3-butadiene is used as the at least one conjugated diene and the sealing gel has a proportion of cis-1,4-butadiene units of 8% by weight to 17% by weight, a proportion of trans-1,4-butadiene units of 59% by weight to 75% by weight and a proportion of 1,2-vinylbutadiene units of 17% by weight to 21% by weight, based on 1,3-butadiene incorporated.

8. Foamed sealing compounds according to any of Claims 1 to 7,
   wherein the natural and/or synthetic rubber (E) is copolymers based on conjugated diolefins from a group comprising 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof, more preferably from a group comprising natural cis-1,4-polyisoprene, synthetic cis-1,4-polyisoprene, 3,4-polyisoprene, polybutadiene, 1,3-butadiene-acrylonitrile copolymer and mixtures thereof.

9. Foamed sealing compounds according to any of Claims 1 to 8, comprising:

   ageing stabilizer (D) in an amount of 0.5 phr to 20 phr, preferably in an amount of 1 phr to 10 phr and more preferably in an amount of 1 phr to 5 phr.

10. Foamed sealing compounds according to any of Claims 1 to 9, comprising:

    plasticizer (F) in an amount of less than 75 phr, preferably 10 phr to 70 phr and more preferably 15 phr to 65 phr.

11. Foamed sealing compounds according to any of Claims 1 to 10, comprising:

    at least one filler (G) in an amount of 1 phr to 50 phr, preferably 1 phr to 30 phr and more preferably 1 phr to 20 phr.

12. Process for producing foamed sealing compounds according to any of Claims 1 to 11, comprising the steps of mixing the sealing gel, the natural or synthetic rubber (E), the resin (C), and the foaming agent.

13. Process for producing the foamed sealing compounds according to Claim 12, further comprising in a mixing apparatus dispersing said foaming agents under pressure in the sealing composition whereby gases expand upon leaving the extruder.

14. Process for producing foamed sealing compounds according to any of Claims 12 to 13, wherein the sealing gel and the natural or synthetic rubber (E) are mixed in the form of their latices.

15. Use of foamed sealing compounds according to any of Claims 1 to 11 for improving adhesion and cohesion properties.

16. Use of foamed sealing compounds according to any of Claims 1 to 11 as sealing layer in tyres, preferably on inner liners in pneumatic motor vehicle tyres, hollow bodies or membranes.

17. Pneumatic motor vehicle tyres having a foamed sealing compound according to any of Claims 1 to 11.

Europäisches
Patentamt

European
Patent Office

Office européen
des brevets

# EUROPEAN SEARCH REPORT

**Application Number**

EP 17 15 3279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 127 488 A (OBRECHT WERNER [DE] ET AL) 3 October 2000 (2000-10-03) * column 4, line 34 - line 48; claims 1-9; example 5 * | 1-17 | INV. B60C1/00 C08L15/00 C08F212/36 C08F218/18 C08F222/10 |
| A | EP 1 149 868 A2 (BAYER AG [DE]) 31 October 2001 (2001-10-31) * paragraphs [0020], [0041] * | 1-17 | |
| A | US 2002/161119 A1 (OBRECHT WERNER [DE] ET AL) 31 October 2002 (2002-10-31) * paragraphs [0043], [0054]; claims 1-11 * | 1-17 | |
| A | US 2012/041129 A1 (STEINHAUSER NORBERT [DE] ET AL) 16 February 2012 (2012-02-16) * the whole document * | 1-17 | |
| A | EP 1 935 926 A1 (GOODYEAR TIRE & RUBBER [US]) 25 June 2008 (2008-06-25) * the whole document * | 1-17 | **TECHNICAL FIELDS SEARCHED (IPC)** B60C C08L C08J C08F |

The present search report has been drawn up for all claims

| Place of search | Date of completion of the search | Examiner |
|---|---|---|
| Munich | 27 July 2017 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 3279

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2017

| Patent document cited in search report | | Publication date | Patent family member(s) | | Publication date |
|---|---|---|---|---|---|
| US 6127488 | A | 03-10-2000 | CA | 2226917 A1 | 17-07-1998 |
| | | | CN | 1188117 A | 22-07-1998 |
| | | | DE | 19701488 A1 | 23-07-1998 |
| | | | EP | 0854170 A1 | 22-07-1998 |
| | | | JP | 3794810 B2 | 12-07-2006 |
| | | | JP | H10204217 A | 04-08-1998 |
| | | | TW | 523534 B | 11-03-2003 |
| | | | US | 6127488 A | 03-10-2000 |
| EP 1149868 | A2 | 31-10-2001 | BR | 0101613 A | 27-11-2001 |
| | | | CA | 2344955 A1 | 28-10-2001 |
| | | | DE | 10021070 A1 | 31-10-2001 |
| | | | EP | 1149868 A2 | 31-10-2001 |
| | | | JP | 2001354807 A | 25-12-2001 |
| | | | MX | PA01004265 A | 06-08-2002 |
| | | | US | 2001051685 A1 | 13-12-2001 |
| US 2002161119 | A1 | 31-10-2002 | AU | 1903602 A | 29-04-2002 |
| | | | BR | 0114723 A | 14-10-2003 |
| | | | CA | 2426569 A1 | 17-04-2003 |
| | | | DE | 10052287 A1 | 25-04-2002 |
| | | | EP | 1337582 A2 | 27-08-2003 |
| | | | ES | 2254525 T3 | 16-06-2006 |
| | | | KR | 20030045125 A | 09-06-2003 |
| | | | MX | PA03003438 A | 04-05-2004 |
| | | | TW | I290158 B | 21-11-2007 |
| | | | US | 2002161119 A1 | 31-10-2002 |
| | | | WO | 0232990 A2 | 25-04-2002 |
| US 2012041129 | A1 | 16-02-2012 | BR | PI1007397 A2 | 16-02-2016 |
| | | | CN | 102282026 A | 14-12-2011 |
| | | | DE | 102009005713 A1 | 29-07-2010 |
| | | | EP | 2389295 A1 | 30-11-2011 |
| | | | JP | 5430675 B2 | 05-03-2014 |
| | | | JP | 2012515824 A | 12-07-2012 |
| | | | KR | 20110110332 A | 06-10-2011 |
| | | | RU | 2011134613 A | 27-02-2013 |
| | | | TW | 201038673 A | 01-11-2010 |
| | | | US | 2012041129 A1 | 16-02-2012 |
| | | | WO | 2010084114 A1 | 29-07-2010 |
| EP 1935926 | A1 | 25-06-2008 | EP | 1935926 A1 | 25-06-2008 |
| | | | US | 2008149245 A1 | 26-06-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3565151 A
- WO 2009143895 A
- DE 19806935 A1
- US 20060144496 A1
- DE 102013208445 A1
- DE 102205042380 A1
- DE 102007028932 A1
- US 6962181 B2
- DE 4220563 A
- GB 1078400 A
- EP 405216 A
- EP 0854171 A
- DE 60118364 T2
- EP 1149866 A
- EP 1291369 A
- DE 10345043 A
- DE 102005014271 A
- JP 7316126 A
- JP 7316127 A
- JP 7316128 A
- GB 823823 A
- GB 823824 A
- US 2187146 A
- US 20040127617 A
- US 5295525 A
- US 4913209 A

### Non-patent literature cited in the description

- **KARL-LUDWIG HAKEN.** Grundlagen der Kraftfahrzeugtechnik. Carl-Hanser Verlag München
- **JAMES E. MARK ; BURAK ERMAN.** Science and Technology of Rubber. Elsevier Academic Press, 2005, 50
- Rubber Technologist's Handbook. vol. 2, 190
- **D. SCHURING.** Scale Models in Engineering. Pergamon Press, 1977
- **F. RÖTHEMEYER ; F. SOMMER.** Kautschuk Technologie. Carl Hanser Verlag, 2006, 95 ff
- Ullmann's Encyclopedia of Industrial Chemistry. 2011, vol. 31, 345-355
- **A. E. HAMIELEC ; H. TOBITA.** Polymerization Processes. *Ullmann's Encyclopedia of Industrial Chemistry,* 2011, 88
- **A. E. HAMIELEC ; H. TOBITA.** Polymerization Processes. *Ullmann's Encyclopedia of Industrial Chemistry,* 2011, 85
- Römpp's Lexicon, Coatings and Printing Inks. Römpp Lexikon, Lacke und Druckfarben. Georg Thieme Verlag, 1998
- Industrial Polymers and Syntheses. **H. G. ELIAS.** Macromolecules. Wiley-VCH Verlag GmbH & Co, 2007, vol. 2, 160 ff
- **I. FRANTA.** Elastomers and Rubber Compounding Materials. Elsevier, 1989
- Ullmann's Encyclopedia of Industrial Chemistry. VCH Verlagsgesellschaft, 1993, vol. A 23